# EUROPÄISCHE PATENTSCHRIFT

(11) **EP 3 487 794 B1**
(45) Veröffentlichungstag und Bekanntmachung des Hinweises auf die Patenterteilung: **04.11.2020**
(21) Anmeldenummer: 17710136.7
(22) Anmeldetag: 21.02.2017
(51) Int. Cl.: B65G 43/08, B65G 47/08

(54) **VORRICHTUNG UND VERFAHREN ZUM UMGANG MIT BEWEGTEN STUECKGUETERN, FOERDER-, VERARBEITUNGS- UND/ODER VERPACKUNGSANLAGE MIT EINER VORRICHTUNG ZUM UMGANG MIT BEWEGTEN STUECKGUETERN**
DEVICE AND METHOD FOR HANDLING MOVED PIECE GOODS, AND A CONVEYING, PROCESSING AND/OR PACKAGING SYSTEM HAVING A DEVICE FOR HANDLING MOVED PIECE GOODS
DISPOSITIF ET PROCÉDÉ PERMETTANT LA MANUTENTION DE MARCHANDISES DE DÉTAIL EN MOUVEMENT, INSTALLATION DE TRANSPORT, DE TRAITEMENT ET/OU D'EMBALLAGE COMPRENANT UN DISPOSITIF PERMETTANT LA MANUTENTION DE MARCHANDISES DE DÉTAIL EN MOUVEMENT

(30) Priorität: 21.07.2016 DE 102016213400
(43) Veröffentlichungstag der Anmeldung: 29.05.2019
(73) Patentinhaber: Krones Aktiengesellschaft, 93073 Neutraubling (DE)
(72) Erfinder: ASTNER, Michael, 93073 Neutraubling (DE); BEER, Erhard, 93073 Neutraubling (DE); KOLLMUSS, Manuel, 93073 Neutraubling (DE); MEHDI, Arsalan, 93073 Neutraubling (DE)
(74) Vertreter: Benninger, Johannes
(86) Internationale Anmeldenummer: PCT/EP2017/053880
(87) Internationale Veröffentlichungsnummer: WO 2018/015029

(56) Entgegenhaltungen:
- WO-A1-2010/106529
- WO-A1-2012/150086
- WO-A1-2015/014559
- DE-A1- 10 155 596
- DE-A1-102013 204 095
- DE-U1- 20 108 401
- US-A- 5 464 088
- US-A1- 2006 099 064

## Beschreibung

Die vorliegende Erfindung betrifft eine Vorrichtung zum Umgang mit bewegten Stückgütern mit den Merkmalen des unabhängigen Anspruchs 1. Weiterhin betrifft die Erfindung ein Verfahren zum Umgang mit bewegten Stückgütern mit den Merkmalen des unabhängigen Verfahrensanspruchs 5. Zudem betrifft die Erfindung eine Förder-, Verarbeitungs- und/oder Verpackungsanlage mit einer Vorrichtung zum Umgang mit bewegten Stückgütern mit den Merkmalen des unabhängigen Anspruchs 14.

Bei bekannten Verfahren zur Verpackung und/oder Palettierung von Stückgütern wie Paketen, Gebinden o. dgl. werden diese zunächst auf in Linien fördernden Transporteinrichtungen befördert und in geeigneter Weise verschoben, ausgerichtet und/oder zusammengestellt, um gewünschte Lagenbilder zu erzeugen, die anschließend mehrfach übereinander gestapelt werden können, bspw. auf hierfür vorbereitete Paletten. Diese Behandlungsschritte können insbesondere bei Anlagen zur Behandlung von Behältern für Getränke sinnvoll eingesetzt werden. Bei den fraglichen Stückgütern kann es sich bspw. um Pakete, um Kästen, Kartons, Gebinde oder sonstige Cluster handeln. Damit die erwähnten Paletten transportsicher sind, müssen die zusammengestellten Lagenbilder, die auch als zusammengestellte Takte bezeichnet werden, bestimmte Anforderungen erfüllen. Herkömmlicherweise sind zur Ausbildung solcher Takte vorbereitende Maßnahmen notwendig, die etwa darin bestehen, die zunächst regelmäßig oder schrittweise auf einem sog. Zuteilungsband beförderten Stückgüter auf einem zwischengeschalteten Transportband zu gruppieren bzw. zu sammeln, um sie von dort gesammelt und/oder gruppiert an ein Lagenbildungsband oder einen Lagenbildungstisch zu übergeben.

Aus dem Stand der Technik ist es bekannt, Stückgüter vereinzelt von einem Zuteilband auf ein Transportband zu übergeben, womit gemeint ist, dass auf dem Zuteilband jeweils einzelne Stückgüter an das Transportband übergeben werden. Diese Übergabe kann dadurch erfolgen, dass jedes einzelne Stückgut durch einen Geschwindigkeitsunterschied zwischen Zuteilband und Transportband einzeln auf das Transportband übergeben wird, wobei eine Steuerung mithilfe optischer Sensoren wie etwa Lichtschranken vorhanden sein kann. Ebenso denkbar ist es, die Stückgüter vereinzelt von dem Transportband durch schrittweises Fördern des Lagenbildungsbandes zu übergeben. Um auf solche Weise jeweils einzelne Stückgüter vom Transportband auf das Lagenbildungsband zu übergeben, kann das Lagenbildungsband in synchronisierten Schritten mit dem Transportband genau um eine Länge eines Stückgutes in Transportrichtung verfahren werden. Auf dem Transportband können diese Takte oder Gruppierungen bzw. Teile der gruppierten Stückgüter je nach gewünschter Lagenbildung auch gedreht werden, um dann an das Lagenbildungsband übergeben zu werden.

Für die Ausgestaltung von Gruppiertischen, die dem Zusammenführen von Stückgütern wie z.B. Kartons, Schrumpfpacks, Trays oder Kunststoffkisten dienen, kennt der Stand der Technik unterschiedliche Ausführungsvarianten. So können etwa Stückgüter zusammengeführt werden, indem sie in eine zweidimensionale Formation (Blockbildung, z.B. Palettenschicht) gebracht werden. Hierzu kann bspw. eine Rollenbahn aus einer Gasse oder aus mehreren Gassen linear versorgt werden. Die Stückgüter können je nach Bedarf vor oder auf dem Rollenförderer gedreht und auf dem Rollenförderer mechanisch durch Stoppstellen in der jeweils erforderlichen Position angeordnet werden. Die solchermaßen positionierten Stückgüter können anschließend orthogonal zur Transportrichtung vom Rollenförderer abgeschoben werden. Der Zulauf, die Anordnung und das Abschieben der Stückgüter können hierbei als ein Zyklus betrachtet werden. Zur Zusammenstellung einer Schicht wird mindestens ein solcher Zyklus benötigt; normalerweise jedoch sind mehrere solcher Zyklen notwendig, um eine Schicht zu bilden. Die teilweise diskontinuierliche Förderung mit ihren relativ abrupten Geschwindigkeits- bzw. Richtungsänderungen führt zu entsprechend hohen mechanischen Belastungen, die auf die Stückgüter wirken, was einer produktschonenden Verarbeitung der Stückgüter abträglich sein kann.

Das Dokument EP 1 465 101 A2 offenbart eine Vorrichtung zur Reihenbildung von Packgütern für Gebindepalletierer. Der Gebindepalletierer umfasst mindestens eine Lagenbildungsstation und mindestens eine Palletierstation. Die Reihenbildungsvorrichtung umfasst mindestens eine Positionierstation, auf der die Packgüter während des Transports in mindestens einer Reihe mit gewünschten Abständen angeordnet werden. Die Positionierstation ist an einen der Lagenbildungsstation zugeordneten Bereitstellungsförderer angeschlossen. Stromaufwärts der Positionierstation ist mindestens ein Stauförderer angeordnet, wobei die Positionierstation mehrere in Transportrichtung hintereinander angeordnete Förderabschnitte mit steuer- und regelbaren Antrieben besitzt. Mit den steuer- und regelbaren Antrieben ist es möglich, eine gewünschte Abstandsbildung der Packgüter zu erzielen. Die Reihenbildungsvorrichtung besitzt mindestens eine Überwachungseinrichtung zur Ermittlung und Überwachung der Abstandsbildung der Packgüter. Der Aufbau dieser bekannten Reihenbildungsvorrichtung ist relativ aufwendig und kompliziert, zumal er eine Vielzahl von Bändern erfordert, die für eine Abstandsbildung und/oder Drehung der Packgüter benötigt werden.

Aus der US 5 123 231 A ist eine Vorrichtung zur Zusammenstellung von Artikeln zu Gruppen und zu deren anschließenden Verpackung bekannt. Auf einem Zuführband werden die Artikel jeweils unter einem vordefinierten Abstand einem Sammelband zugeführt, auf dem die Gruppen aus einer immer gleichen Anzahl von Artikeln zusammengestellt werden. Die Gruppen werden mit einem nachfolgenden Band einer Verpackungseinrichtung zugeführt.

Die EP 1 927 559 A1 offenbart einen Gruppiertisch zum Zusammenführen von Gebinden, insbesondere von Schrumpfpacks, zur Schichtenbildung, umfassend einen kontinuierlich antreibbaren Förderer, einen dem Förderer nachgeordneten und taktweise antreibbaren Schrittförderer, einen seitlich neben dem Schrittförderer angeordneten Schichtenbildungsplatz und eine dem Schrittförderer zugeordnete rechtwinklig zur Förderrichtung wirksame Abschiebeeinrichtung zum gruppenweisen Überführen der Gebinde auf den Schichtenbildungsplatz.

Die US 2005/0246056 A1 offenbart ein System zum Anordnen von Packstücken in einer Lage, die im weiteren Verlauf der Handhabung auf einer Palette abgelegt bzw. gestapelt werden. Dabei sind drei Förderbänder linear angeordnet. Über ein erstes Förderband werden die Packstücke der Vorrichtung zur Verfügung gestellt. Die Packstücke sind auf dem ersten Förderband linear angeordnet. Mit einem zweiten Förderband werden die Packstücke vereinzelt. Anschließend gelangen die Packstücke zu einem dritten Förderband, bei dem die Anordnung der Packstücke durchgeführt wird. Alle drei Förderbänder laufen mit unterschiedlichen, doch jeweils konstanten Geschwindigkeiten. Nachdem eine Lage fertig zusammengestellt ist, wird die Lage auf die Palette übergeführt.

Geeignete Manipulatoren bzw. den Lagenbildungsbändern zugeordnete Roboter können bspw. als Mehrachsroboter ausgebildet sein, wie sie bspw. aus der DE 10 2009 026 220 A1 im Zusammenhang mit der Gruppierung von Artikeln bzw. von Getränkebehältern bekannt sind. Eine häufig eingesetzte Variante von derartigen Manipulatoren sind sog. Portalroboter, die oftmals in modularer Bauweise in Verpackungsstraßen, in Gruppiereinheiten oder in Palettierstationen eingesetzt werden. Als Transportmittel bzw. Förderelement wird häufig ein horizontal in Längsrichtung der Förderebene verlaufendes Förderband oder ein anderes endlos umlaufendes Medium verwendet, auf dem die Gegenstände und/oder die Verpackungen in vorbestimmten Positionen oder auch in zufällig eingenommenen Positionen angeordnet sind. Ein derartiges Modul ist bspw. aus der DE 10 2009 043 970 A1 bekannt. Die in solchen Modulen typischerweise eingesetzten Portalroboter können bspw. mit Greifvorrichtungen zum seitlichen Erfassen der zu handhabenden und zu manipulierenden Stückgüter ausgestattet sein, wie sie etwa aus der DE 10 2010 020 847 A1 bekannt sind.

Aus der WO 2014/110349 A1 sind optische Überwachungseinrichtungen bekannt, mit deren Hilfe ein Handhabungsroboter zur Erfassung und Positionierung von Stückgütern im Zusammenhang mit deren Transport, Positionierung und/oder Stapelung gesteuert werden. Allerdings ist hierbei eine permanente Steuerung auf Grundlage der optischen Erfassung der Stückgüter vorgesehen, was einen hohen Rechen- und Steuerungsaufwand bedeutet.

Die DE 602 00 953 T2 offenbart ein Verfahren und System zur automatischen und kontinuierlichen Herstellung von Schichten von Verkaufseinheiten vor einer Palettierung. Die Schichtenbildungen erfolgen mittels Robotern, deren exakte Positionierung mittels Inkrementalgebern vorgegeben wird, die den Fördereinrichtungen für die Verkaufseinheiten zugeordnet sind. Bei solchen Koppelungen mittels Inkrementalgebern besteht jedoch das Risiko, dass bei einer ungenauen Positionierung von Stückgütern Abweichungen in der Zuordnung ergeben. Außerdem können sich Fehlpositionierungen von Stückgütern aufsummieren, so dass weitere Maßnahmen zur exakten Bewegungssteuerung der Roboter notwendig werden können.

Mit allen diesen bekannten Handhabungssystemen werden in erster Linie präzise Positionierungen von Stückgütern, Paketen, Gebinden und/oder Artikeln für eine möglichst störungsfreie und zuverlässige Lagenbildungs-, Palettierungs- und/oder Verpackungsvorbereitung angestrebt. Ein Nebenziel, das jedoch zunehmend wichtiger wird, besteht darin, hierbei die Taktzeiten zu reduzieren, ohne hinsichtlich eines bereits erreichten Grades an Präzision und/oder hinsichtlich der bereits erreichten Zuverlässigkeit Einbußen in Kauf nehmen zu müssen.

US 2006/099064 A1 beschreibt eine Vorrichtung nach dem Oberbegriff des Anspruchs 1.

Angesichts des bekannten Standes der Technik kann es als Ziel der vorliegenden Erfindung angesehen werden, eine exakte und positionsgenaue Verarbeitung und Handhabung von Stückgütern zu ermöglichen, die in mindestens einer Reihe befördert bzw. transportiert werden. Die Bewegungssteuerung eines Manipulators zur Erfassung der Stückgüter soll exakt auf die Position der angelieferten Stückgüter abstimmbar sein, ohne dass hierzu ein großer Rechen- und/oder Steuerungsaufwand erforderlich sein soll.

Zudem soll das Verfahren mit hoher Geschwindigkeit ablaufen können, ohne dass damit Nachteile hinsichtlich der Positionierungspräzision und/oder der Zuverlässigkeit der Manipulation der Stückgüter in Kauf zu nehmen sind. Die entsprechende Vorrichtung soll schnell und mit geringem Rechen- und/oder Steuerungsaufwand für die Bewegungssteuerung eines Manipulators betreibbar sein, und dies bei hoher Zuverlässigkeit und gleichbleibend hoher Stellpräzision.

Diese Ziele der Erfindung werden mit den Gegenständen der unabhängigen Ansprüche, d.h. mit einer Vorrichtung zum Umgang mit bewegten Stückgütern, mit einem Verfahren zum Umgang mit bewegten Stückgütern und mit einer Förder-, Verarbeitungs- und/oder Verpackungsanlage umfassend eine Vorrichtung zum Umgang mit bewegten Stückgütern erreicht, welche die Merkmale der unabhängigen Patentansprüche 1, 5 und 14 umfassen. Merkmale vorteilhafter Weiterbildungen der Erfindung ergeben sich aus den jeweiligen abhängigen Ansprüchen.

Die Erfindung bezieht sich auf eine Vorrichtung bzw. Handhabungsvorrichtung und auf ein Verfahren zum Umgang mit bewegten Stückgütern sowie eine Förder-, Verarbeitungs- und/oder Verpackungsanlage für Stückgüter umfassend eine Vorrichtung zum Umgang mit bewegten Stückgütern. Wenn daher im Zusammenhang der vorliegenden Beschreibung an einigen Stellen lediglich noch von einem Verfahren, einer Verfahrensvariante, dem erfindungsgemäßen Verfahren o. dgl. die Rede ist, so ist damit generell das genannte Verfahren zum Umgang mit bewegten Stückgütern gemeint. Vorzugsweise betrifft dies ein Verfahren zum Umgang mit in mindestens einer Reihe hintereinander bewegten Stückgütern. Wenn zudem im Zusammenhang der vorliegenden Beschreibung an einigen Stellen nur noch von einer Vorrichtung, einer Handhabungsvorrichtung, einer Vorrichtungsvariante, der erfindungsgemäßen Vorrichtung o. dgl. die Rede ist, so ist damit generell die genannte Vorrichtung zum Umgang mit bewegten Stückgütern gemeint, insbesondere zum Umgang mit in mindestens einer Reihe hintereinander bewegten Stückgütern. Wenn in der folgenden Beschreibung, in den Beschreibungspassagen zu den Ausführungsbeispielen, in den Ansprüchen und/oder im Zusammenhang mit der gesamten Beschreibungs- und/oder Zeichnungsoffenbarung von einem Umgang mit Stückgütern die Rede ist, so umfasst dies die Handhabung, die Erfassung, die Positionierung, die Bewegung im Raum, die Drehung, Ausrichtung etc., insbesondere im Zusammenhang mit einem Manipulator und/oder beweglichen Teilen des Manipulators, die in einem Erfassungsraum bzw. Erfassungsbereich angeordnet sind und sich dort innerhalb von definierbaren Grenzen bewegen können. Allerdings umfasst der Begriff des Umgangs gleichermaßen Positionierungs-, Förder- und/oder alle Arten von Handhabungsschritten, die im Zusammenhang mit Fördereinrichtungen, Horizontalfördereinrichtungen, Transportbändern etc. stattfinden können, die Teil der erfindungsgemäßen Vorrichtung sind und/oder mit dieser in Wirkverbindung und/oder in einer Transportverbindung stehen, seien dies in Transport- und/oder Förderrichtung nachgeordnete, vorgeordnete oder integrierte Teile der erfindungsgemäßen Vorrichtung.

Wenn von einer unveränderten oder neuen Ausrichtung der Stückgüter nach ihrer Erfassung und/oder Handhabung die Rede ist, so ist damit im Zusammenhang mit der vorliegend beschriebenen Vorrichtung und mit dem vorliegenden beschriebenen Verfahren insbesondere die winkelige Ausrichtung der zuvor erfassten und vom Manipulator bewegten und/oder verschobenen und/oder gedrehten Stückgüter die Rede. Mit Erfassen ist im vorliegenden Zusammenhang meist das körperliche, formschlüssige und/oder kraftschlüssige und/oder klemmende Greifen eines Stückgutes oder gleichzeitig mehrerer Stückgüter sowie deren bzw. dessen Handhabung bis zur Erreichung einer Zielposition und/oder Zielausrichtung gemeint.

Bei den bewegten Stückgütern kann es sich gemäß einer bevorzugten Ausführungsform um in mindestens einer Reihe hintereinander bewegte Artikel, Packstücke, Behälterzusammenstellungen, Gebinde, Kartons o.ä. handeln. Beispielsweise kann vorgesehen sein, dass eine Mehrzahl von gleichen oder unterschiedlichen Artikeln durch eine Kartonumverpackung, durch eine Umreifung oder mehrere Umreifungen, durch eine Folienverpackung o. dgl. zu einem Gebinde bzw. Mischgebinde zusammengefasst sind. Weiterhin kann eine Mehrzahl von Getränkebehältern, die beispielsweise durch eine Schrumpfverpackung, durch ein Umreifungsband oder mehrere Umreifungsbänder zusammengehalten werden, jeweils ein Stückgut im Sinne der vorliegenden Definition bilden. Die in mindestens einer Reihe hintereinander bewegten Stückgüter können dabei je nach Anforderung von nachfolgenden Handhabungsvorrichtungen gleich oder unterschiedlich ausgebildet sein.

Die Stückgüter können innerhalb der mindestens einen Reihe auf unterschiedliche Art- und Weise transportiert werden. Gemäß einer Ausführungsform der Erfindung werden die Stückgüter innerhalb der Reihe über wenigstens eine Transporteinrichtung jeweils voneinander beabstandet und durch Lücken voneinander getrennt zu einem Erfassungsbereich wenigstens eines Manipulators der erfindungsgemäßen Vorrichtung transportiert. Alternativ und/oder zusätzlich können auch Gruppen von Stückgütern dem Erfassungsbereich des wenigstens einen Manipulators zugeführt werden, wobei diese Gruppen jeweils mehrere, insbesondere mindestens zwei zumindest weitgehen lückenlos aneinandergrenzende Stückgüter innerhalb der Reihe umfassen können. Die Gruppen können auch unterschiedlich groß sein; zudem kann einer Gruppe mit zwei, drei oder vier lückenlos aneinander grenzenden Stückgütern ein einzelnes Stückgut folgen etc. Eine weitere Ausführungsform sieht vor, dass die Stückgüter innerhalb der Reihe ohne Abstände oder mit minimalen Abständen als ununterbrochene bzw. geschlossene Formation zugeführt werden.

Unter einer geschlossenen Formation versteht man in diesem Zusammenhang insbesondere eine als Endlos-Formation ausgebildete Reihe an hintereinander transportierten Stückgütern, die keine Unterbrechung oder nur minimale Unterbrechungen zwischen den Stückgütern aufweist und eine beliebige Anzahl von Stückgütern umfassen kann. In der geschlossenen Formation können die Stückgüter insbesondere Stoß an Stoß transportiert werden. Dies wird beispielsweise durch einen einmalig aufgebrachten Staudruck von hinten verursacht. Der Staudruck wird dabei vorzugsweise vor oder kurz vor dem Erfassungsbereich des mindestens einen Manipulators der Handhabungsvorrichtung erzeugt. Alternativ kann vorgesehen sein, dass dauerhaft zumindest ein leichter Staudruck von hinten auf die Stückgüter einwirkt. Die geschlossene Formation ist von einer unterbrochenen Formation zu unterscheiden, bei der jeweils Gruppen mit jeweils einer definierten Anzahl von Stückgütern nacheinander zugeführt werden, wobei die Gruppen jeweils dieselbe Anzahl an Stückgütern oder eine unterschiedliche Anzahl an Stückgütern umfassen und jeweils durch Lücken voneinander getrennt sind.

Die Vorrichtung zum Umgang mit bewegten Stückgütern umfasst wenigstens eine Transporteinrichtung zur Zuführung der Stückgüter in oben beschriebener Weise zu einem Erfassungsbereich mindestens eines Manipulators der Vorrichtung. Bei der Transporteinrichtung handelt es sich beispielsweise um einen Horizontalförderer, insbesondere ein Horizontalförderband. Von der Transporteinrichtung gelangen die Stückgüter auf eine weitere, insbesondere fluchtende Horizontalfördereinrichtung, auf welcher sie durch den Manipulator der Handhabungsvorrichtung innerhalb des Erfassungsbereiches erfasst und insbesondere auch freigegeben werden. Die Horizontalfördereinrichtung und der Manipulator mit seinem Erfassungsbereich bilden insbesondere das Gruppiermodul der Handhabungsvorrichtung.

Gemäß einer Ausführungsform können die Transporteinrichtung und die Horizontalfördereinrichtung durch fluchten angeordnete Förderbänder ausgebildet sein. Alternativ können die Begriffe Transporteinrichtung und Horizontalfördereinrichtung auch für aufeinander folgende Transportabschnitte eines durchgängigen Förderbandes verwendet werden.

Der Erfassungsbereich im Sinne der vorliegenden Erfindung definiert insbesondere einen Bewegungsraum des wenigstens einen Manipulators der erfindungsgemäßen Vorrichtung. Der mindestens eine Manipulator ist typischerweise und/oder vorzugsweise zum klemmenden und/oder formschlüssigen und/oder kraftschlüssigen Erfassen und/oder Entgegennehmen jeweils mindestens eines Stückgutes aus der mittels der wenigstens einen Transporteinrichtung in den Erfassungsbereich des Manipulators einlaufenden Reihe von hintereinander transportierten Stückgütern ausgebildet. Weiterhin ist der Manipulator zum Abtrennen und selektiven Überführen des mindestens einen erfassten Stückgutes in eine Zielposition und/oder Zielausrichtung ausgebildet.

Gemäß einer Ausführungsform können dem mindestens einen Manipulator wenigstens zwei gegenüberliegend, insbesondere paarweise einander gegenüberliegend angeordnete, gegeneinander zustellbare Klemm- und/oder Greifmittel zugeordnet sein, welche zum klemmenden und/oder kraft- und/oder formschlüssigen Erfassen sowie zum Abtrennen und selektiven Überführen der jeweiligen Stückgüter in die Zielpositionen und/oder Zielausrichtungen miteinander, insbesondere jeweils paarweise miteinander, zusammenwirken. Die Klemm- und/oder Greifmittel des Manipulators sind während des Erfassens der Stückgüter parallel zur Transportrichtung der zulaufenden Stückgüter ausgerichtet.

Aus den bewegten Stückgütern, insbesondere aus den vereinzelt, in Gruppen oder als geschlossene Formation zugeführten Stückgütern, wird im Erfassungsbereich des wenigstens einen Manipulators wenigstens ein transportiertes Stückgut klemmend und/oder kraftschlüssig und/oder formschlüssig vom Manipulator erfasst, von den nachfolgenden Stückgütern räumlich abgetrennt und in eine definierte relative Zielposition und/oder Zielausrichtung gegenüber den nachfolgenden Stückgütern gebracht. Dies erfolgt insbesondere in einem kontinuierlichen Prozess, bei dem die Zufuhr nachfolgender Stückgüter nicht unterbrochen wird, sondern kontinuierlich fortgeführt wird. Die Stückgüter werden nach Verbringen in ihre jeweilige definierte Zielposition mittels der mindestens zwei sich gegenüberliegenden Klemm- und/oder Greifmittel freigegeben. Die gegeneinander zustellbaren Klemm- und/oder Greifmittel erlauben ein schnelles Erfassen, Verschieben, Positionieren und Freigeben der Stückgüter in der gewünschten Geschwindigkeit mit der gewünschten Stellpräzision. Auch andere Manipulatoren können vorteilhaft eingesetzt werden, bspw. solche, die als Mehrachsroboter, als Teile von solchen Mehrachsrobotern, als Parallelkinematik-Roboter, als Deltakinematik-Roboter bzw. sog. Tripode oder einen Teil eines Deltakinematik-Roboters oder Parallelkinematik-Roboter bildenden Manipulators ausgebildet sind.

Hierbei werden zumindest Raumkoordinaten und/oder Positions- und/oder Umrissdaten wenigstens eines in Transportrichtung bewegten Stückgutes der zum Erfassungsbereich transportierten Stückgüter vor dem Erfassen durch den Manipulator sensorisch erfasst und einer Steuer- und/oder Auswerteeinheit als Positionswert zur Verfügung gestellt.

Die hierzu notwendige Sensorik wird durch wenigstens eine dem Erfassungsbereich und/oder einem Bewegungsraum des wenigstens einen Manipulators räumlich und/oder funktionell zugeordnete und beweglich ausgebildete optische Erfassungseinrichtung bereitgestellt. Diese optische Erfassungseinrichtung dient der Erfassung der oben genannten Daten, d.h. insbesondere der zumindest Raumkoordinaten und/oder Positions- und/oder Umrissdaten eines bewegten Stückguts bzw. auch nur dessen aktuelle Vorderkantenposition bzw. Umrissposition.

Zumindest der Manipulator und/oder weitere Förderkomponenten der Vorrichtung, beispielsweise die Transporteinrichtung, über die die Stückgüter dem Erfassungsbereich zugeführt werden oder die dem Erfassungsbereich zugeordnete Horizontalfördereinrichtung etc. werden auf Grundlage der ermittelten Raumkoordinaten und/oder Positions- und/oder Umrissdaten kalibriert und/oder angesteuert. Weiterhin können die ermittelten Daten auch in Rückkoppelung der Position der beweglichen optischen Erfassungseinrichtung verwendet werden. Beispielsweise kann das Erfassen einer Raumkoordinate oder von entsprechenden Positions- und/oder Umrissdaten eine Aktivierung oder Inaktivierung der optischen Erfassungseinrichtung auslösen, ein Mitführen der optischen Erfassungseinrichtung mit der Transporteinrichtung und/oder Horizontalfördereinrichtung auslösen o.ä. Sobald sich Abweichungen bei den Gebindemaßen u/o der Fördergeschwindigkeit o.ä. ergeben, kann das wie nachfolgend noch näher beschrieben ständig - d.h. für alle nachfolgenden Zyklen bzw. Manipulationsschritte - nachkorrigiert werden.

Bei der lückenlosen Zuführung der Stückgüter innerhalb einer geschlossenen Formation können prozessbedingt kleine Lücken zwischen den Stückgütern auf der Transporteinrichtung entstehen. Wenn sich solche Lücken aufsummieren, besteht insbesondere die Gefahr, dass sich die einlaufenden Stückgüter in Relation zu der definierten Aufnahmeposition des Manipulators verschieben, so dass der Manipulator das jeweilig zu erfassende mindestens eine Stückgut bzw. die jeweilig zu erfassende Gruppe von Stückgütern nicht mehr korrekt greifen kann und es gegebenenfalls zu einer Fehlfunktion der Handhabungsvorrichtung kommt. Auch bei der Zuführung einzelner, definiert voneinander beabstandeter Stückgüter und/oder Stückgutgruppen kann es bei dem vorangehenden Verfahrensschritt der Lückenbildung zu Fehlern kommen, die bewirken, dass nicht alle Lücken die jeweils korrekte Größe aufweisen. Um ein fehlerhaftes Erfassen des mindestens einen Stückguts durch den Manipulator zu verhindern, werden die sensorisch ermittelten Daten beispielsweise verwendet, um den Manipulator während des laufenden Verfahrens immer wieder neu zu kalibrieren und auszurichten.

Gemäß einer bevorzugten Ausführungsform der vorliegenden Erfindung kann die optische Erfassungseinrichtung zumindest temporär parallel zu der dem Erfassungsbereich zugeordneten Horizontalfördereinrichtung bewegt werden. Erfindungsgemäß ist die optische Erfassungseinrichtung parallel beweglich zur Transportrichtung der Stückgüter auf der zuführenden Transporteinrichtung bzw. der Horizontalfördereinrichtung ausgebildet. Die bewegliche optische Erfassungseinrichtung ist insbesondere in einem Bewegungsbereich parallel zur Transportrichtung der Stückgüter bzw. der Gruppen von jeweils mindestens zwei gruppierten Stückgütern auf oder parallel zu einer Horizontalfördereinrichtung des im Erfassungsbereich des Manipulators angeordneten Gruppiermoduls beweglich. Der Bewegungsbereich wird durch einen Anfangspunkt und einen Endpunkt begrenzt und definiert somit den Erkennungsbereich der optischen Erfassungseinrichtung. Um die Bewegung der optischen Erfassungseinrichtung in Transportrichtung bzw. entgegen der Transportrichtung zu realisieren, ist diese beispielsweise auf einem Schlitten bzw. Laufschlitten angeordnet, der in einer Schiene, einen Zahnriemenantrieb o.ä. verfahren werden kann, wobei die Schiene parallel zu der in einer Flucht innerhalb einer Reihe hintereinander angeordneten Stückgütern neben oder oberhalb der Horizontalfördereinrichtung angeordnet ist. Insbesondere kann die optische Erfassungseinrichtung zwischen dem Anfangspunkt und dem Endpunkt innerhalb des Bewegungsbereiches verfahren werden.

Gemäß einer Ausführungsform deckt der Bewegungsbereich bzw. Erkennungsbereich der optischen Erfassungseinrichtung den gesamten Erfassungsbereich des Manipulators ab. Insbesondere kann die optische Erfassungseinrichtung parallel zur gesamten Länge der Horizontalfördereinrichtung des Gruppiermoduls bewegt werden. Gemäß einer anderen Ausführungsform ist vorgesehen, dass der Bewegungsbereich bzw. Erkennungsbereich der optischen Erfassungseinrichtung nur einen in Transportrichtung an die Transporteinrichtung grenzenden Teilbereich der Horizontalfördereinrichtung des Gruppiermoduls abdeckt, während eine weitere alternative Ausführungsform ebenfalls offenbart wird, bei der die optische Erfassungseinrichtung einen Bewegungsbereich aufweist, der sich über die Horizontalfördereinrichtung des Gruppiermoduls hinaus erstreckt. Die Bewegung der optischen Erfassungseinrichtung ist vorzugsweise nicht mechanisch an die Bewegung des Manipulators gekoppelt. Erfindungsgemäß verfügt die optische Erfassungseinrichtung über einen eigenständigen, unabhängigen Antrieb. Gemäß einer Ausführungsform ist die optische Erfassungseinrichtung linearbeweglich, während der Manipulator zumindest einer halb einer Bewegungsebene, vorzugsweise innerhalb eines dreidimensionalen Raumes verfahrbar ist. Wie nachfolgend noch näher beschrieben wird kann dagegen über die Steuer- und/oder Auswerteeinheit eine elektronische Kopplung zwischen dem Manipulator und der optischen Erfassungseinrichtung vorgesehen sein.

Wenn im Zusammenhang der Positionserkennung von einer beweglichen optischen Erfassungseinrichtung die Rede ist, so kann es sich hierbei beispielsweise um eine beweglich ausgebildete und/oder beweglich angeordnete Lichtschranke, einen beweglich ausgebildeten und/oder beweglich angeordneten Laserkantenscanner oder einen anderes geeignetes beweglich ausgebildetes und/oder beweglich angeordnetes Detektionsmittel handeln, das geeignet ist, bestimmte Parameter eines Stückgutes und/oder bestimmte Parameter einer Gruppe von Stückgütern, insbesondere Raumkoordinaten und/oder Positions- und/oder Umrissdaten zu erkennen. Bei Verwendung einer beweglichen Lichtschranke weist diese vorzugsweise einen quer zur Transportrichtung der Stückgüter und in etwa horizontal und/oder parallel zu der Auflage- und/oder Transportebene der Horizontalfördereinrichtung ausgerichteten Strahlengang auf. Durch eine Unterbrechung des Strahlengangs wird beispielsweise angezeigt, dass nunmehr ein Stückgut bzw. eine Gruppe von Stückgütern in den Erfassungsbereich des Manipulators bzw. in das Gruppiermodul einläuft.

Bevorzugt wird die Lichtschrankenanordnung durch eine Reflexionslichtschranke zur Erfassung von Hell-Dunkel-Kontrasten innerhalb eines definierbaren Entfernungsbereichs vom eines Senders/Empfängers ausgebildet. Dies ist insbesondere für eine zweibahnige Verarbeitung von bewegten Stückgütern vorteilhaft, bei der jeweils eine optische Erfassungseinrichtung beidseitig zum Erfassungsbereich des mindestens einen Manipulators vorgesehen ist. Jede der optischen Erfassungseinrichtungen ist derart eingestellt, dass sie immer nur Stückgüter der jeweilig zugeordneten Reihe erkennen. Der mindestens eine Manipulator greift nach einem definierten Schema jeweils Stückgüter aus einer der beiden Reihen ab, um diese entsprechend einem zu bildenden Lagenschema anzuordnen und/oder auszurichten.

Sofern anstelle einer Lichtschranke ein sog. Kantenscanner verwendet wird, welcher der Steuer- und/oder Auswerteeinheit Raumkoordinaten und/oder Positions- und/oder Umrissdaten liefert, sind sogar noch detailliertere Positionsdaten erfassbar, so beispielsweise eine Schrägstellung und/oder andere Fehlpositionierung eines der Stückgüter, was ggf. bei der Erfassung durch den Manipulator korrigiert werden kann. Beispielsweise wird ein solcher Kantenscanner verwendet, um Raumkoordinaten und/ Positions- und/oder Umrissdaten für das jeweils zuvorderst befindliche Stückgut und/oder einer in Transportrichtung nach vorne oder nach hinten weisender Umrisskante zu gewinnen.

Gemäß einer weiteren Ausführungsform wird als optische Erfassungseinrichtung mindestens eine Kamera mit nachgeschalteter Bildauswertung verwendet, aus deren Daten die Steuer- und/oder Auswerteeinheit Raumkoordinaten und/oder Positions- und/oder Umrisswerte für ein bewegtes Stückgut gewinnt, insbesondere Raumkoordinaten und/ Positions- und/oder Umrisswerte für das jeweils zuvorderst befindliche Stückgut und/oder dessen nach vorne oder nach hinten weisender Umrisskante.

Die genannten optischen Erfassungseinrichtungen bzw. Sensoreinrichtungen sind beispielhaft zu verstehen. Grundsätzlich können jedoch auch andere Sensorvarianten zum Einsatz kommen, so bspw. Ultraschallsensoren o. dgl. Weitere geeignete Sensoren können vom Fachmann ebenfalls vorteilhaft eingesetzt werden.

Der Manipulator ist weiterhin an eine bereits oben erwähnte Steuer- und/oder Auswerteeinheit gekoppelt. Die Steuer- und/oder Auswerteeinheit der Handhabungsvorrichtung steuert beispielsweise allgemein die Bewegung des Manipulators und/oder weiterer Maschinenbauteile der Vorrichtung. Vorzugsweise enthält die Steuer- und/oder Auswerteeinheit abgespeicherte Informationen zu einer aus einer Vielzahl an Stückgütern zu bildenden Gruppierung für eine palettierfähige Lage, wobei die jeweiligen Zielpositionen und/oder Zielausrichtungen der Stückgüter einen Teil der Informationen bilden und den jeweiligen Stückgütern eine jeweilige bestimmte Lage und/oder relative Orientierung in der jeweiligen Gruppierung zuordnen.

Die sensorisch ermittelten Daten werden an die Steuer- und/oder Auswerteeinheit übermittelt und der wenigstens eine Manipulator und/oder die Bewegungssteuerung des wenigstens einen Manipulators wird /werden zumindest während der Erfassung wenigstens eines bewegten Stückgutes, beispielsweise während der Erfassung des wenigstens einen zuvorderst angeordneten Stückgutes, und der räumlichen Abtrennung des wenigstens einen Stückgutes von den nachfolgenden Stückgütern auf Grundlage der von der Steuer- und/oder Auswerteeinheit gelieferten Koordinaten- und/oder Positionswerte kalibriert. Beispielsweise erfolgt die Kalibrierung anhang von Koordinaten- und/oder Positionswerten für die jeweils zuvorderst befindlichen Stückgüter und/oder deren nach vorne oder nach hinten weisender Umrisskanten.

Die sensorisch ermittelten Werte werden insbesondere verwendet, um vermittels der Steuer- und Auswerteeinheit einen Bewegungsablauf des Manipulators zu berechnen und/oder den Bewegungsablauf gegebenenfalls anzupassen und/oder zu korrigieren. Die berechneten Werde dienen vorzugsweise der selektiven Ansteuerung, Aktivierung und/oder Bewegung der Klemm- oder Greifmittel des Manipulators durch die Steuer- und/oder Auswerteeinheit der Handhabungsvorrichtung.

Bei der Steuer- und/oder Auswerteeinheit kann es sich insbesondere um eine elektronische und/oder programmierbare Steuer- und/oder Auswerteeinheit wie beispielsweise eine SPS handeln. In dieser können unterschiedliche Rezepte / Daten abgelegt sein, mit welchen jeweils unterschiedliche Stückgüter - beispielsweise Sechser-Gebinde und Vierer- Gebinde - geklemmt, freigegeben und/oder realisiert werden können. Die Steuer- und/oder Auswerteeinheit kann insbesondere folgende Rezepte / Daten enthalten:
- unterschiedliche Zielpositionen und/oder Zielausrichtungen, insbesondere ob die Stückgüter mit Rotation oder ohne Rotation in die Zielpositionen und/oder Zielausrichtungen gelangen und/oder
- Informationen zum Ziel- Lagenschema, d.h. Anordnung der Stückgüter in Relation zueinander in der jeweiligen Ziellage und/oder
- Anzahl der Formationen im Zulauf der Vorrichtung, insbesondere einreihiger oder mehrreihiger Zulauf von Stückgütern etc.

Eine vorbeschriebene Vorrichtung kann mit gewissen Anpassungen auch für den mehrbahnigen Zulauf, insbesondere dreibahnigen oder vierbahnigen Zulauf, verwendet werden. Hierbei müssen der Sensor/die Sensoren zur Erfassung der Stückgüter der mittleren Reihe(n) derart angebracht werden, dass sie sich nicht im Erfassungsbereich des Manipulators befinden und diesen somit nicht stören. Andererseits müssen der Senor/die Sensoren aber derart angebracht und ausgerichtet sein, dass dieser/diese die Stückgüter der entsprechenden mittleren Reihe(n) sicher erkennen kann/können und dabei nicht Stückgüter benachbarter (äußerer) Reihen erfasst/ erfassen.

Insbesondere wird bei einem dreibahnigen Zulauf ein Sensor für die mittlere Reihe oberhalb eines bestehenden Sensors an einer Seite des Gruppiermoduls parallelbeweglich zur Horizontalfördereinrichtung angeordnet. Der Sensor für die mittlere Reihe ist derart ausgerichtet, dass er schief auf die einlaufenden Stückgüter der mittleren Reihe blickt und beispielsweise die Vorderkante des zuvorderst einlaufenden Stückgutes der mittleren Reihe erkennt.

Bei einem vierbahnigen Zulauf ist jeweils ein Sensor für eine der beiden mittleren Reihen oberhalb eines bestehenden Sensors an beiden Seiten des Gruppiermoduls parallelbeweglich zur Horizontalfördereinrichtung angeordnet. Insbesondere erkennt beispielsweise der in Transportrichtung rechts neben der Horizontalfördereinrichtung angeordneter Sensor die Rechte der beiden mittleren Reihen und der in Transportrichtung links neben der Horizontalfördereinrichtung angeordnete Sensor erkennt die Rechte der beiden mittleren Reihen. Auch hierbei ist darauf zu achten, dass sich die Erkennungsbereiche der Sensoren deutlich voneinander abgrenzen und die Sensoren jeweils nur die Stückgüter einer Reihe erkennen.

Die Vorrichtung kann alternativ oder zusätzlich zu den beschriebenen Merkmalen ein oder mehrere Merkmale und/oder Eigenschaften des Verfahrens sowie der nachfolgend detailliert beschriebenen unterschiedlichen Verfahrensvarianten umfassen. Ebenfalls kann das Verfahren alternativ oder zusätzlich einzelne oder mehrere Merkmale und/oder Eigenschaften der beschriebenen Vorrichtung aufweisen.

Bei dem erfindungsgemäßen Verfahren werden bewegte Stückgüter in einem Erfassungsbereich wenigstens eines Manipulators erfasst, von nachfolgenden Stückgütern räumlich abgetrennt und in eine definierte relative Zielposition und/oder Zielausrichtung verbracht, wobei zumindest Raumkoordinaten und/oder eine Position mindestens eines der in Transportrichtung zum Erfassungsbereich bewegten Stückgüter über wenigstens eine dem Erfassungsbereich räumlich und/oder funktionell zugeordneten und beweglich ausgebildeten optischen Erfassungseinrichtung sensorisch erfasst und einer Steuer- und/oder Auswerteeinheit als Positionswert zur Verfügung gestellt wird und wobei zumindest der Manipulator und/oder weitere zugeordnete Förderkomponenten auf Grundlage der Raumkoordinaten und/oder Positions- und/oder Umrissdaten kalibriert und/oder gesteuert wird/werden. Vorzugsweise ist vorgesehen, dass die optische Erfassungseinrichtung der erfindungsgemäßen Vorrichtung zumindest temporär in etwa synchron mit einer dem Erfassungsbereich zugeordneten Auflage- und/oder Transportebene der Horizontalfördereinrichtung mitbewegbar ist, insbesondere in etwa parallel zu einer Transportrichtung der Stückgüter auf der Transporteinrichtung und/oder der Horizontalfördereinrichtung.

Vorzugsweise erfolgt eine Bewegungssteuerung des wenigstens einen Manipulators im Erfassungsbereich zur Erfassung des wenigstens einen Stückgutes, insbesondere wenigstens eines zuvorderst angeordneten Stückgutes oder wenigstens eines zuvorderst angeordneten Stückgutes eines nachfolgenden Manipulationsschrittes oder zumindest eines der nachfolgenden Manipulationsschritte, und zu seiner räumlichen Abtrennung von den nachfolgenden Stückgütern auf Grundlage der von der Steuer- und/oder Auswerteeinheit gelieferten Koordinaten- und/oder Positionswerte für das jeweils zuvorderst in den Erfassungsbereich befindliche oder eintretende Stückgut und/oder dessen in Transportrichtung nach vorne oder nach hinten weisender Umrisskante.

Vorzugsweise wird die Bewegungssteuerung des wenigstens einen Manipulators bei jeder Phase der Erfassung und Aufnahme des wenigstens einen Stückgutes oder wenigstens eines zuvorderst angeordneten Stückgutes eines nachfolgenden Manipulationsschrittes oder zumindest eines der nachfolgenden Manipulationsschritte auf Grundlage der von der Steuer- und/oder Auswerteeinheit gelieferten Koordinaten- und/oder Positionswerte für das jeweils zuvorderst befindliche Stückgut und/oder dessen nach vorne weisender Umrisskante kalibriert. Dies ist beispielsweise im Rahmen einer Echtzeitkorrektur möglich, d.h., die Position des Manipulators wird jeweils anhand der Koordinaten- und/oder Positionswerte des zuvorderst ankommenden zu greifenden Stückgutes oder wenigstens eines zuvorderst angeordneten Stückgutes eines vorausgegangenen Manipulationsschrittes oder zumindest eines der vorausgegangenen Manipulationsschritte berechnet und angepasst.

Sollen weiter hinten einlaufende Stückgüter gegriffen werden, so dass durch Verschieben der gegriffenen Stückgüter in Flucht zur Transportrichtung diese, sowie alle vor diesen befindlichen Stückgüter gemeinsam verschoben werden, so kann die Position des zuvorderst befindlichen Stückgutes, auch wenn dieses nicht durch den Manipulator gegriffen wird, ebenfalls zur Echtzeitkorrektur der Position des Manipulators verwendet werden. Insbesondere kann das Greifen von weiter hinten befindlichen Stückgütern innerhalb einer geschlossenen Formation verwendet werden, um größere Stückgutgruppen in einem Verfahrensschritt von der geschlossenen Formation abtrennen zu können.

Gemäß einer alternativen Ausführungsform werden die ermittelten Daten für die Korrektur beim Abgreifen der Stückgüter nicht direkt im anschließenden Verfahrensschritt verwendet, sondern erst in einem später folgenden Verfahrensschritt. Dies kann notwendig sein, wenn die Steuer- und/oder Auswerteeinheit bereits das Bewegungsprofil des Manipulators für den direkt nachfolgenden Verfahrensschritt berechnet hat.

Vorzugsweise ist vorgesehen, die jeweiligen Raumkoordinaten und/oder Positionen der in Transportrichtung jeweils zuvorderst befindlichen zum Erfassungsbereich transportierten Stückgüter und/oder die jeweiligen Raumkoordinaten und/oder Positionen der Umrisskanten der zum Erfassungsbereich transportierten Stückgüter permanent und/oder in zyklischer Folge und/oder in unregelmäßiger Folge zu erfassen und der Steuer- und/oder Auswerteeinheit als Positionswerte zur Verfügung zu stellen.

Gemäß einer Ausführungsform erfasst die optische Erfassungseinrichtung ein in den Erfassungsbereich des Manipulators eintretendes Stückgut oder eine bereits im Erfassungsbereich des Manipulators befindliches Stückgut und/oder dessen in Transportrichtung nach vorne weisender Umrisskante, insbesondere die Vorderkante des zuvorderst befindlichen Stückgutes und folgt zumindest solange der Position der in Transportrichtung nach erfassten Umrisskante, bis dieses Stückgut und gegebenenfalls mindestens ein weiteres Stückgut vom Manipulator erfasst und von den nachfolgenden Stückgütern abgetrennt wird / werden.

Die beweggliche optische Erfassungseinrichtung erkennt mindestens einen definierten bzw. definierbaren Parameter des zuvorderst in den Erkennungsbereich einlaufenden Stückgutes der vordersten Gruppe. Beispielsweise erkennt der Sensor eine Vorderkante des vorauslaufenden Stückgutes oder eines der folgenden Stückgüter am Anfangspunkt seines Bewegungsbereiches und somit mit Eintreten des zuvorderst einlaufenden Stückgutes in den Erkennungsbereich der optischen Erfassungseinrichtung bzw. des Sensors. Nunmehr wird die optische Erfassungseinrichtung beispielsweise über die Laufschiene parallel zu dem von der optischen Erfassungseinrichtung erfassten voranlaufenden Stückgut in Transportrichtung mitgeführt, bis das voranlaufende Stückgut den Endpunkt des Bewegungsbereiches erreicht hat und den Erfassungsbereich der optischen Erfassungseinrichtung verlässt.

Anschließend kann die optische Erfassungseinrichtung entgegen der Transportrichtung in Richtung des Anfangspunktes seines Bewegungsbereiches zurückgeführt werden, bis durch die optische Erfassungseinrichtung der entsprechende Parameter des nächsten voranlaufenden Stückgutes erfasst wird. Nunmehr kann vorgesehen sein, dass die optische Erfassungseinrichtung wiederum über die Laufschiene parallel zu dem erfassten voranlaufenden Stückgut in Transportrichtung mitgeführt wird, bis das voranlaufende Stückgut den Endpunkt des Bewegungsbereiches erreicht hat und den Erfassungsbereich des Sensors verlässt usw., bzw. bis das Stückgut und gegebenenfalls weitere angrenzende Stückgüter durch den Manipulator erfasst wird/werden.

Die jeweilige Position der optischen Erfassungseinrichtung, insbesondere die jeweilige Position der optischen Erfassungseinrichtung, nachdem dieser die Vorderkante oder eine Hinterkante eines bewegten Stückgutes, insbesondere eines in Transportrichtung zuvorderst angeordneten Stückgutes einer jeweiligen zuvorderst angeordneten Gruppe von Stückgütern, innerhalb des Erkennungsbereiches in Transportrichtung erkannt hat und mit dieser innerhalb des Bewegungsbereiches mitgeführt wird, kann vorzugsweise an eine Steuerungseinrichtung übermittelt werden. Die Werte werden insbesondere verwendet, um den mindestens einen Manipulator des Gruppiermoduls anzusteuern, damit dieser die jeweils zuvorderst innerhalb des Gruppiermoduls angeordnete Gruppe von Stückgütern entsprechend der zu bildenden Lage oder Teillage erfassen und manipulieren kann.

Der Manipulator wird insbesondere durch die erfassten Daten der aktuellen Förderphase oder aber auf Grundlage der von der Steuer- und/oder Auswerteeinheit gelieferten Koordinaten- und/oder Positionswerte für ein in einer vorangegangenen Förderphase und/oder einem vorangegangenen Manipulationsschritt durch den Manipulator erfasstes Stückgut und/oder dessen nach vorne weisender Umrisskante kalibriert.

Nachdem mindestens das zuvorderst befindliche Stückgut oder eine Gruppe, umfassend das zuvorderst befindliche Stückgut und mindestens ein weiteres in direkter Anlage mit diesem befindliches Stückgut, durch den Manipulator erfasst und von den nachfolgenden Stückgütern der mindestens einen Reihe abgetrennt worden ist, wird die optische Erfassungseinrichtung entgegen der Transportrichtung zurückgeführt. Die optische Erfassungseinrichtung wird so lange entgegen der Transportrichtung zurückgeführt, bis sie erneut eine nach vorne weisende Umrisskante des nächstfolgenden, nunmehr zuvorderst angeordneten Stückgutes erfasst. Sobald die optische Erfassungseinrichtung dieses nunmehr zuvorderst angeordnete Stückgut erkannt hat, endet die Bewegung entgegen der Transportrichtung und die optische Erfassungseinrichtung wird wiederum in etwa synchron zu den Stückgütern mit der Auflage- und/oder Transportebene der dem Erfassungsbereich zugeordneten Horizontalfördereinrichtung mitbewegt. Das heißt, die optische Erfassungseinrichtung folgt zumindest solange der Position der in Transportrichtung nach vorne weisenden Umrisskante des nunmehr zuvorderst angeordneten Stückgutes, bis dieses vom Manipulator erfasst und allein bzw. als Gruppe mit mindestens einem nachfolgenden Stückgut von den in Reihe nachfolgenden Stückgütern abgetrennt wird.

Die für das Kalibrierverfahren eingesetzte optische Erfassungseinrichtung wird gemäß einer bevorzugten Ausführungsform durch wenigstens eine Lichtschrankenanordnung gebildet, die einen quer zur Transportrichtung und in etwa horizontal und/oder parallel zu der Auflage- und/oder Transportebene der Horizontalfördereinrichtung für die Stückgüter ausgerichteten Strahlengang umfasst. Sobald das zuvorderst einlaufende Stückgut in den Strahlengang eintritt, wird ein Signal an die Steuer- und/oder Auswerteeinheit übermittelt, woraufhin eine Bewegung der optischen Erfassungseinrichtung bewirkt wird. Vorzugsweise bewegt sich die optische Erfassungseinrichtung parallel zu den einlaufenden Stückgütern. Insbesondere bewegt sich die optische Erfassungseinrichtung so lange mit dem zuvorderst angeordneten Stückgut mit, bis dieses durch den Manipulator erfasst und von den nachfolgenden Stückgütern abgetrennt wird.

Gemäß einer alternativen Ausführungsform verbleibt die optische Erfassungseinrichtung nach Erfassen einer Umrisskante wenigstens eines bewegten Stückgutes, insbesondere nach Erfassen einer nach vorn weisenden Umrisskante des zuvorderst angeordneten Stückgutes oder wenigstens eines zuvorderst angeordneten Stückgutes eines nachfolgenden Manipulationsschrittes oder zumindest eines der nachfolgenden Manipulationsschritte, für eine definierte Zeiteinheit stationär und wird anschließend synchron mit der Horizontalfördereinrichtung mitgeführt. Während die optische Erfassungseinrichtung stationär verbleibt, werden die Stückgüter auf der Transporteinrichtung bzw. Horizontalfördereinrichtung kontinuierlich weiterbewegt.

Beispielsweise ist vorgesehen, dass die optische Erfassungseinrichtung für eine definiert Zeiteinheit stationär verbleibt, die die Transporteinrichtung bzw. Horizontalfördereinrichtung benötigt, um teilweise oder zumindest weitgehend das abzugreifende Stückgut bzw. die Gruppe an abzugreifenden Stückgütern weiter zu transportieren, so dass sich die optische Erfassungseinrichtung nunmehr in einem Bereich zwischen der Mitte des abzugreifenden Stückgutes und dessen Hinterkante bzw. zwischen der Vorderkante und der Hinterkante des in Transportrichtung nachlaufenden Stückgutes einer Gruppe von mindestens zwei abzugreifenden Stückgütern befindet. Die definierte Zeiteinheit wird beispielsweise durch die Steuer- und/oder Auswerteeinheit anhand der Transportgeschwindigkeit der Transporteinrichtung bzw. der Fördergeschwindigkeit der Horizontalfördereinrichtung berechnet. Wichtig ist bei dieser Verfahrensvariante insbesondere, dass die optische Verfassungseinrichtung nicht derart lange stationär verbleibt, dass sie sich bereits parallel zu später abzugreifenden Stückgütern befindet.

Während die optische Erfassungseinrichtung stationär verbleibt, befindet sie sich zudem in einem inaktiven Zustand, d.h. es werden keine Signale detektiert und/oder Daten generiert. Nach der definierte Zeiteinheit wird eine Bewegung der optischen Erfassungseinrichtung synchron zur der Transporteinrichtung bzw. Horizontalfördereinrichtung ausgelöst, so dass sich die optische Erfassungseinrichtung synchron zu dem abzugreifenden Stückgut bzw. der Gruppe an mindestens zwei abzugreifenden Stückgütern mitbewegt.

Nachdem der Manipulator das abzugreifende Stückgut bzw. die Gruppe der abzugreifenden Stückgüter erfasst und räumlich abgetrennt hat, erhält die optische Erfassungseinrichtung über die Steuer- und/oder Auswerteeinheit von dem Manipulator ein Signal. Dieses bewirkt zum einen, dass die optische Erfassungseinrichtung nunmehr in Gegenrichtung zu der Transportrichtung der Stückgüter auf der Transporteinrichtung bzw. Horizontalfördereinrichtung bewegt wird und zum anderen, dass die optische Erfassungseinrichtung nunmehr aktiv ist und Raumkoordinaten und/oder Positions- und/oder Umrissdaten erfassen kann. Die optische Erfassungseinrichtung wird so lange entgegen der Transportrichtung bewegt, bis sie eine Umrisskante eines nachfolgenden Stückgutes erfasst, insbesondere bis sie eine nach vorn weisende Umrisskante eines nachfolgenden Stückgutes erfasst. Das dabei erzeugte Signal bewirkt wiederum den temporären stationären Verbleib der Erfassungseinrichtung in Kombination mit der Inaktivierung usw.

Befindet sich die optische Erfassungseinrichtung bereits parallel zu nicht abgegriffenen nachlaufenden Stückgütern bevor / wenn die Aktivierung der optischen Erfassungseinrichtung erfolgt und die Bewegung in Gegenrichtung ausgelöst werden soll - beispielsweise weil die optische Erfassungseinrichtung zu lang stationär verblieben war -, dann wird dies an dem Signal erkannt, das die optische Erfassungseinrichtung aufgrund der Anwesenheit der Stückgutes im gerade von der optischen Erfassungseinrichtung abgedeckten Teil des Erkennungsbereiches liefert. In diesem Fall kann vorgesehen sein, dass die optische Erfassungseinrichtung beispielsweise mit einer gegenüber der Transporteinrichtung und/oder Horizontalfördereinrichtung erhöhten Geschwindigkeit in Transportrichtung bewegt wird, um in Transportrichtung vor die bewegten Stückgüter zu gelangen. Durch eine anschließende Bewegung in Gegenrichtung kann nunmehr die Erfassung der entsprechenden Raumkoordination, Positions- und/oder Umrissdaten gemäß obiger Beschreibung erfolgen. Auch kann eine Pendelbewegung der optischen Erfassungseinrichtung in Transportrichtung und entgegen der Transportrichtung vorgesehen sein, mit der sich die optische Erfassungseinrichtung entsprechend das nunmehr vorderste bewegte Stückgut sucht.

Gemäß einer weiteren Ausführungsform erfolgt die Bewegungssteuerung des wenigstens einen Manipulators im Erfassungsbereich zur Erfassung wenigstens eines bewegten Stückgutes, insbesondere eines zuvorderst angeordneten Stückgutes, oder wenigstens eines bewegten Stückgutes eines nachfolgenden Manipulationsschrittes oder zumindest eines der nachfolgenden Manipulationsschritte und zu seiner räumlichen Abtrennung von den nachfolgenden Stückgütern auf Grundlage der von der Steuer- und/oder Auswerteeinheit gelieferten Koordinaten- und/oder Positionswerte für jeweils ein bewegtes Stückgut und/oder dessen in Transportrichtung nach hinten weisender Umrisskante. Hierfür ist insbesondere die Verwendung eines Kantenscanners als optische Erfassungseinrichtung vorteilhaft.

Bei allen hier beschriebenen Ausführungsformen ist vorgesehen, dass die optische Erfassungseinrichtung zumindest temporär in etwa synchron mit einer Auflage- und/oder Transportebene einer dem Erfassungsbereich zugeordneten Horizontalfördereinrichtung mitbewegt wird und weiterhin zumindest temporär entgegen der Transportrichtung der Stückgüter auf der Auflage- und/oder Transportebene bewegt wird.

Bei den beschriebenen Verfahrensvarianten werden vorzugsweise in mindestens einer Reihe hintereinander einzeln voneinander beabstandet herantransportierte Stückgüter und/oder Gruppen mit zwei oder mehr Stückgütern und/oder voneinander beabstandete gleiche oder unterschiedlich große Gruppen mit jeweils gleicher oder unterschiedlicher Anzahl von Stückgütern oder in geschlossener Formation angeordnete und/oder in unterbrochener Formation mit gleichen oder unterschiedlich großen Lücken zwischen aufeinanderfolgenden Stückgütern und/oder Gruppen von Stückgütern zum Erfassungsbereich des Manipulators transportiert und dort mittels der optischen Erfassungseinrichtung sensiert und die entsprechenden Signale zur jeweiligen Kalibrierung des Manipulators auf die jeweiligen Positionen der im selben Manipulationsschritt, in einem nachfolgenden Manipulationsschritt oder zumindest einem der nachfolgenden Manipulationsschritte zu erfassenden Stückgüter verarbeitet.

Der beschriebenen Verfahrensvarianten erfolgen insbesondere mittels der oben beschriebenen erfindungsgemäßen Vorrichtung.

Die vorliegende Erfindung dient im Wesentlichen der ständigen und/oder zyklisch oder unregelmäßig wiederkehrenden Kalibrierung eines Manipulators einer erfindungsgemäßen Vorrichtung bzw. Handhabungsvorrichtung, wie sie zuvor beschrieben wurde. Die zu handhabenden und zu positionierenden Stückgüter werden in Reihen jeweils einzeln voneinander beabstandet und/oder als voneinander beabstandete Stückgutgruppen oder unmittelbar aufeinanderfolgend als geschlossene Formationen in den Erfassungsbereich des Manipulators transportiert. Der Manipulator kann bspw. maximal zwei, drei oder mehr einlaufende Stückgüter gleichzeitig erfassen. Diese Stückgüter können beispielsweise 2x3 durch eine Umverpackung zusammengefasste Getränkebehälter o.ä. umfassen.

Die Erfindung betrifft weiterhin eine Förder-, Verarbeitungs- und/oder Verpackungsanlage für Stückgüter mit einer oben beschriebenen Vorrichtung zum Umgang mit bewegten Stückgütern. Der beschriebenen Vorrichtung zum Umgang mit bewegten Stückgütern Förderstrecken und/oder Manipulierstationen zur Anordnung der Stückgüter in für die Vorrichtung verarbeitbare Konfigurationen vorgeordnet und mindestens eine Palettierstation zur Anordnung der mittels der Vorrichtung gruppierten und/oder in Lagenanordnungen gebrachten Stückgüter nachgeordnet.

Die wenigstens eine dem Erfassungsbereich und/oder einem Bewegungsraum des wenigstens einen Manipulators der Vorrichtung zum Umgang mit bewegten Stückgütern zugeordnete, beweglich ausgebildete optische Erfassungseinrichtung zur Gewinnung von Raumkoordinaten und/oder Positions- und/oder Umrissdaten wenigstens eines in Transportrichtung bewegten Stückgutes, über einen eigenständigen, insbesondere von der Transportrichtung, über welche die bewegten Stückgüter zu einem Erfassungsbereich des mindestens einen Manipulators transportierbar sind, unabhängigen Antrieb verfügt.

Die Bewegung der optischen Erfassungseinrichtung ist vorzugsweise nicht mechanisch an die Bewegung des Manipulators gekoppelt sondern ist von der Bewegung des Manipulators unabhängig. Insbesondere verfügt die optische Erfassungseinrichtung über einen separaten Antrieb und ist zumindest temporär parallel beweglich zu einer dem Erfassungsbereich zugeordneten Horizontalfördereinrichtung ausgebildet. Jedoch kann eine elektronische Koppelung zwischen dem Manipulator und der optischen Erfassungsvorrichtung vorgesehen sein, bei der insbesondere durch entsprechende Signale des Manipulators eine Bewegung der optischen Erfassungseinrichtung in Transportrichtung oder entgegen der Transportrichtung und/oder eine Aktivierung oder Inaktivierung der optischen Erfassungseinrichtung ausgelöst werden kann.

Die von der optischen Erfassungseinrichtung ermittelten Raumkoordinaten und/oder Positions- und/oder Umrissdaten werden zumindest für die Kalibrierung und/oder Steuerung des Manipulators der Vorrichtung zum Umgang mit bewegten Stückgütern und/oder weitere Förder- und/oder Anlagekomponenten verwendet. Die Daten können beispielsweise auch herangezogen werden, um fortlaufend weitere Maschinenkomponenten der Förder-, Verarbeitungs- und/oder Verpackungsanlage, beispielsweise der Vorrichtung vor- oder nachgeordnete Fördereinrichtungen, die der Vorrichtung nachgeordnete Palettierstation etc., fortlaufen neu zu kalibrieren, um einen störungsfreien Betrieb der Anlage zu gewährleisten.

Ein besonderer Vorteil der erfindungsgemäßen Vorrichtung, des erfindungsgemäßen Verfahrens und der erfindungsgemäßen Förder-, Verarbeitungs- und/oder Verpackungsanlage liegen darin, dass die optische Erfassungseinrichtung gute, zuverlässige Werte liefert, an denen der Bewegung des Manipulators und/oder weitere Förder- und/oder Anlagekomponenten schnell angepasst werden kann, so dass Fehler durch ein Aufsummieren von kleinen ungewünschten Lücken bzw. von fehlerhaft ausgebildeten Lücken zwischen den einlaufenden Stückgütern bzw. Stückgutgruppen direkt korrigiert werden können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figuren 1 bis 9 zeigen schematisch eine erste Ausführungsform einer automatisierten Positionserkennung / Kalibrierung innerhalb eines Gruppiermoduls einer erfindungsgemäßen Handhabungsvorrichtung.
Figuren 10 bis 13 zeigen schematisch eine zweite Ausführungsform einer automatisierten Positionserkennung / Kalibrierung innerhalb eines Gruppiermoduls einer erfindungsgemäßen Handhabungsvorrichtung.
Figuren 14 bis 20 zeigen schematisch eine dritte Ausführungsform einer automatisierten Positionserkennung / Kalibrierung innerhalb eines Gruppiermoduls einer erfindungsgemäßen Handhabungsvorrichtung.
Figuren 21 bis 27 zeigen schematisch eine vierte Ausführungsform einer automatisierten Positionserkennung / Kalibrierung innerhalb eines Gruppiermoduls einer erfindungsgemäßen Handhabungsvorrichtung.
Fig. 28 zeigt schematisch eine fünfte Ausführungsform einer automatisierten Positionserkennung / Kalibrierung innerhalb eines Gruppiermoduls einer erfindungsgemäßen Handhabungsvorrichtung.
Figur 29 zeigt schematisch eine seitliche Darstellung einer sechsten Ausführungsform einer automatisierten Positionserkennung / Kalibrierung innerhalb eines Gruppiermoduls einer erfindungsgemäßen Handhabungsvorrichtung.
Figur 30 zeigt schematisch eine Darstellung von oben der sechsten Ausführungsform einer automatisierten Positionserkennung / Kalibrierung innerhalb eines Gruppiermoduls einer erfindungsgemäßen Handhabungsvorrichtung gemäß Figur 29.

Für gleiche oder gleich wirkende Elemente der Erfindung werden identische Bezugszeichen verwendet. Teilweise werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung und das erfindungsgemäße Verfahren ausgestaltet sein können und stellen keine abschließende Begrenzung dar.

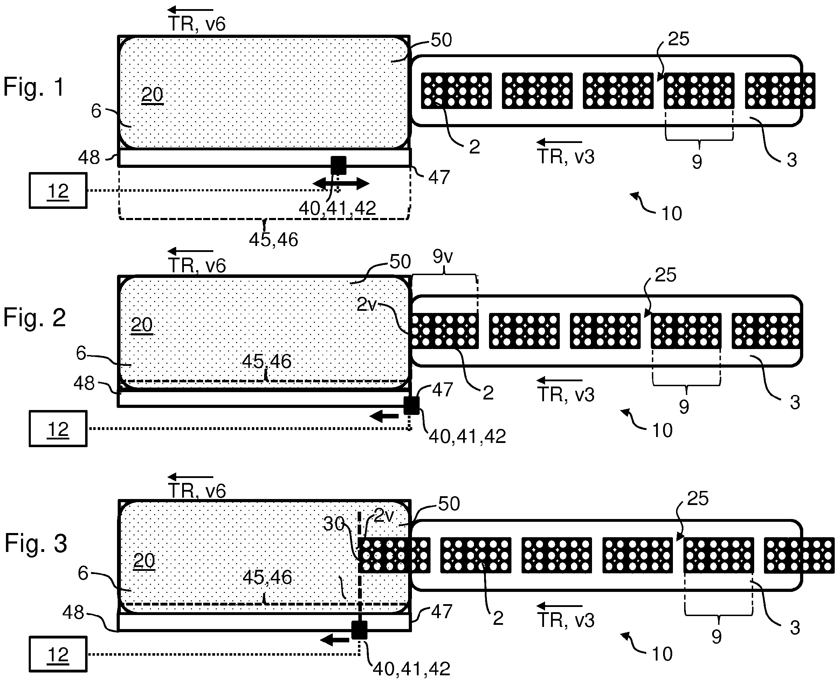

Die Figuren 1 bis 9 zeigen in schematischen Darstellungen eine erste Ausführungsform einer automatisierten Positionserkennung / Kalibrierung innerhalb eines Gruppiermoduls 20 einer erfindungsgemäßen Handhabungsvorrichtung 10. Stückgüter 2 werden in getakteten Gruppen 9 über eine Transporteinrichtung 3 dem Gruppiermodul 20 zugeführt. Insbesondere handelt es sich bei den Stückgütern 2 im dargestellten Ausführungsbeispiel jeweils um Gebinde aus sechs Getränkebehältern, die beispielsweise mit einer Schrumpfverpackung zusammen gehalten werden. Eine Gruppe 9 umfasst jeweils drei Stückgüter 2. Im Gruppiermodul 20 wird jeweils eine Gruppe 9 an Stückgütern 2 durch einen geeigneten Manipulator (nicht dargestellt), beispielsweise einen Greifer, gegriffen und verschoben, gedreht o.ä., um eine palettierfähige Lage oder eine Vorgruppierung für eine palettierfähige Lage zu bilden (nicht dargestellt). Die über die Transporteinrichtung 3 einlaufenden aufeinanderfolgenden Gruppen 9 sind jeweils durch definierte Lücken 25 voneinander beabstandet. Die Lücken 25 werden in einem nicht dargestellten Taktbildungsmodul erzeugt und weisen vorzugsweise jeweils dieselbe Größe auf. Da es aber prozessbedingt und/oder aufgrund von Gebindemaßabweichungen der Stückgüter 2 und/oder aufgrund von Abständen zwischen den Stückgütern 2 innerhalb einer Gruppe 9 zu Abweichungen in der Größe der Lücken 25 kommen kann, d.h. zu Abweichungen in den Abständen zwischen den Gruppen 9, ist es vorteilhaft, die genaue Position der Gruppen 9 direkt vor und/oder innerhalb des Gruppiermoduls 20 zu bestimmen und den Manipulator (nicht dargestellt) des Gruppiermoduls 20 anhand dieser Messwerte zu kalibrieren. Anhand der gemessenen Position der jeweiligen vermessenen Gruppe 9 in Verbindung mit bekannten Verfahrensparametern, beispielsweise mit der Transportgeschwindigkeit v3 der Gruppen 9 auf der zuführenden Transporteinrichtung 3 oder der Geschwindigkeit v6 der Gruppen 9 auf einer Horizontalfördereinrichtung 6 des Gruppiermoduls 20, ist eine Kalibrierung des mindeste einen Manipulators (nicht dargestellt) des Gruppiermoduls 20 möglich. Dadurch wird sichergestellt, dass die zu manipulierende Gruppe 9 von Stückgütern 2 immer korrekt gegriffen und entsprechend verschoben, gedreht und/oder anderweitig manipuliert werden kann.

Die Positionserkennung erfolgt mit Hilfe eines beweglichen Sensors 40. Dabei kann es sich beispielsweise um eine beweglich ausgebildete und/oder angeordnete Lichtschranke 41, einen beweglich ausgebildeten und/oder angeordneten Laserkantenscanner 42 oder einen anderes geeignetes beweglich ausgebildetes und/oder angeordnetes optisches Detektionsmittel handeln, das geeignet ist, bestimmte Parameter eines Stückgutes 2 und/oder bestimmte Parameter einer Gruppe 9 von Stückgütern 2 auf optischem Wege zu erkennen. Bei Verwendung einer beweglichen Lichtschranke 41 weist diese vorzugsweise einen quer zur Transportrichtung TR der Stückgüter 2 und in etwa horizontal und/oder parallel zu der Auflage- und/oder Transportebene der Horizontalfördereinrichtung 6 ausgerichteten Strahlengang auf. Durch eine Unterbrechung des Strahlengangs wird beispielsweise angezeigt, dass nunmehr ein Stückgut 2 bzw. eine Gruppe 9 von Stückgütern in das Gruppiermodul 20 einläuft. Bei Verwendung eines Kantenscanners lassen sich weitere und/oder detailliertere Positionsparameter und/oder Lageparameter des jeweils erfassten Stückgutes 2 bzw. der erfassten Gruppe 9 ermitteln, so beispielsweise Fehlpositionierungen o. dgl., die ggf. mittels des die Stückgüter 2 erfassenden Manipulators 5 ausgeglichen werden können.

Der bewegliche Sensor 40 ist insbesondere in einem Bewegungsbereich 45 parallel zur Transportrichtung TR der Stückgüter 2 bzw. der Gruppen 9 von jeweils mindestens zwei gruppierten Stückgütern 2 auf oder parallel zu der Horizontalfördereinrichtung 6 des Gruppiermoduls 20 beweglich. Der Bewegungsbereich 45 wird durch einen Anfangspunkt 47 und einen Endpunkt 48 begrenzt und definiert somit den Erkennungsbereich 50 des Sensors 40. Der Sensor 40 ist beispielsweise auf einem Laufschlitten angeordnet, der über eine Laufschiene 46, einen Zahnriemenantrieb o.ä. parallel zur Transportrichtung TR der Stückgüter 2 bzw. Gruppen 9 zwischen dem Anfangspunkt 47 und dem Endpunkt 48 innerhalb des Bewegungsbereiches 45 verfahren werden kann. Der Sensor 40 ist insbesondere nicht mechanisch an den Manipulator 5 gekoppelt. Weiterhin ist die Beweglichkeit des Sensors 40 nicht an die Beweglichkeit des Manipulators gekoppelt. Insbesondere weist der Sensor 40 einen eigenen Antrieb auf, über den der Sensor40 vorzugsweise parallel zur Transportrichtung TR der einlaufenden Stückgüter 2 oder entgegen der Transportrichtung TR der einlaufenden Stückgüter 2 bewegt werden kann.

Der beweggliche Sensor 40 erkennt mindestens einen bestimmten Parameter des zuvorderst in den Erkennungsbereich 50 einlaufenden Stückgutes 2 der vordersten Gruppe 9v (vgl. Fig. 2). Beispielsweise erkennt der Sensor 40 eine Vorderkante 30 des vorauslaufenden Stückgutes 2v der vordersten Gruppe 9v am Anfangspunkt 47 seines Bewegungsbereiches 45 und somit mit Eintreten des zuvorderst einlaufenden Stückgutes 2v der vorderen Gruppe 9v in den Erkennungsbereich 50 des Sensors 40. Nunmehr wird der Sensor 40 - wie in den Figuren 3 bis 5 dargestellt - über die Laufschiene 46 parallel zu der ersten, voranlaufenden Gruppe 9v mit dem vom Sensor 40 erfassten voranlaufenden Stückgut 2v in Transportrichtung TR mitgeführt, bis das voranlaufende Stückgut 2v der vorderen Gruppe 9v den Endpunkt 48 des Bewegungsbereiches 45 erreicht hat und den Erkennungsbereich 50 des Sensors 40 verlässt.

Alternativ wird der Sensor 40 über die Laufschiene 46 parallel zu der vorderen Gruppe 9v mit dem erfassten voranlaufenden Stückgut 2v in Transportrichtung TR so lange mitgeführt, bis die vordere Gruppe 9v durch einen Manipulator (nicht dargestellt) des Gruppiermoduls 20 erfasst und in eine Zielposition und/oder Zielausrichtung verbracht wird (nicht dargestellt). Die Zielposition und/oder Zielausrichtung der Gruppe 9v befindet sich vorzugsweise außerhalb des Erkennungsbereiches 50.

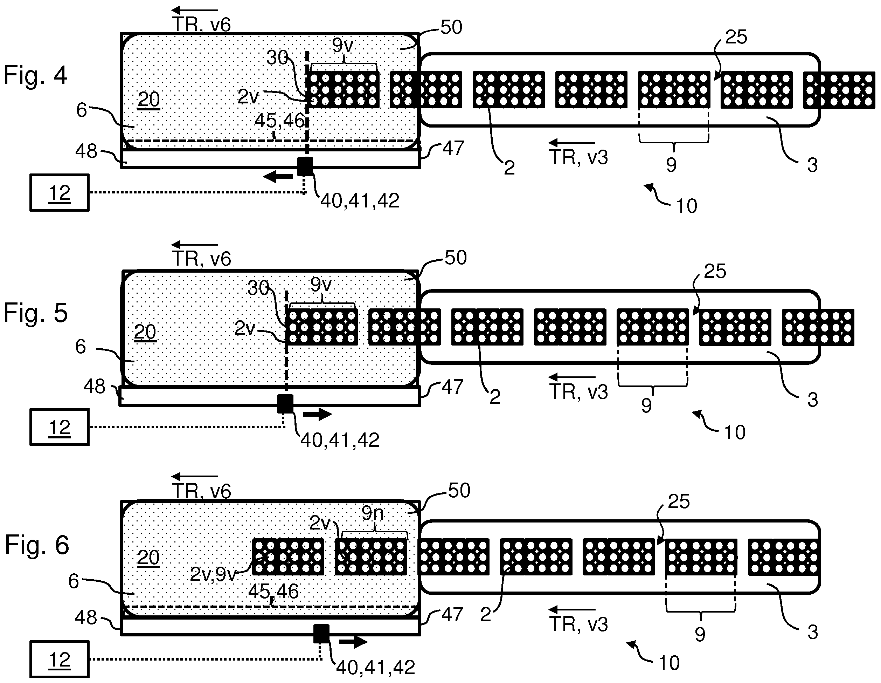

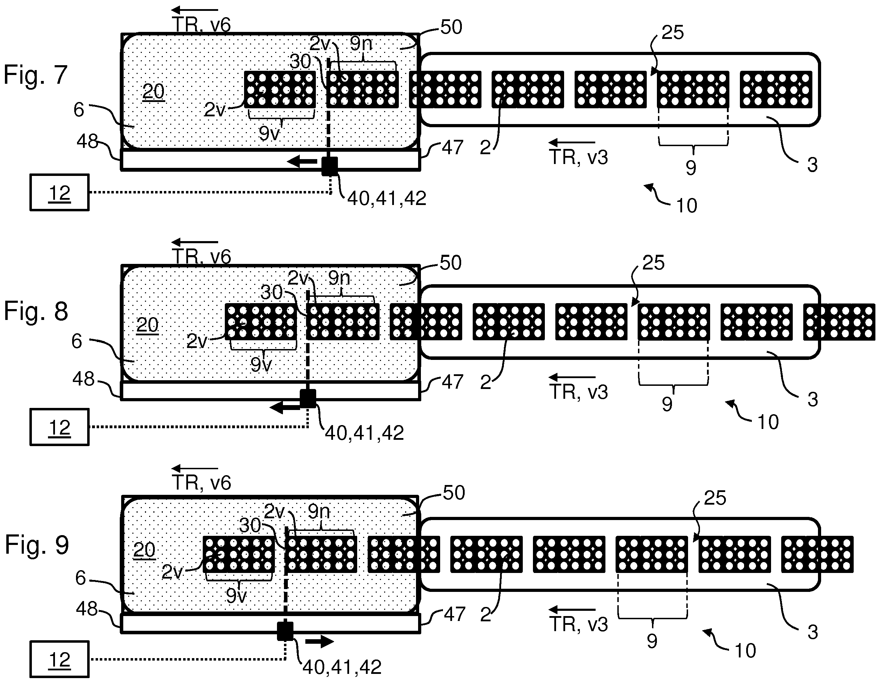

Der Sensor 40 wird nunmehr - wie in den Figuren 5 bis 7 dargestellt - entgegen der Transportrichtung TR in Richtung des Anfangspunktes 47 seines Bewegungsbereiches 45 zurückgeführt, bis durch den Sensor 40 der entsprechende Parameter der nächsten nachlaufenden Gruppe 9n, insbesondere der entsprechende Parameter des voranlaufende Stückgut 2v der nächsten nachlaufenden Gruppe 9n, erfasst wird (vgl. Fig. 7).

Nunmehr wird der Sensor 40 wiederum - wie in den Figuren 7 bis 9 dargestellt - über die Laufschiene 46 parallel zu der Gruppe 9n mit dem erfassten voranlaufenden Stückgut 2v der Gruppe 9n in Transportrichtung TR mitgeführt, bis das voranlaufende Stückgut 2v der Gruppe 9n den Endpunkt 48 des Bewegungsbereiches 45 erreicht hat und den Erkennungsbereich 50 des Sensors 40 verlässt usw. bzw. bis die Gruppe 9n durch einen Manipulator (nicht dargestellt) erfasst wird.

Die jeweilige Position des Sensors 40, insbesondere die jeweilige Position des Sensors 40 nachdem dieser die Vorderkante 30 eines in Transportrichtung TR zuvorderst angeordneten Stückgutes 2v einer jeweiligen zuvorderst angeordneten Gruppe 9v, 9n von Stückgütern 2 innerhalb des Erkennungsbereiches 50 in Transportrichtung TR erkannt hat und mit dieser innerhalb des Bewegungsbereiches 45 mitgeführt wird, wird an eine Steuerungseinrichtung 12 übermittelt. Die Werte werden insbesondere verwendet, um den mindestens einen Manipulator (nicht dargestellt) des Gruppiermoduls 20 anzusteuern, damit dieser die jeweils zuvorderst innerhalb des Gruppiermoduls 20 angeordnete Gruppe 9v, 9n von Stückgütern 2 entsprechend der zu bildenden Lage oder Teillage erfassen und manipulieren kann (nicht dargestellt).

Für den Fachmann ist es selbstverständlich, dass die Vermessung der Position der zuvorderst einlaufenden Gruppe 9v, 9n auch vor dem Gruppiermodul 20 im Bereich der Transporteinrichtung 3 oder auch im Übergangsbereich zwischen dem Gruppiermodul 20 und der Transporteinrichtung 3 erfolgen kann. Insbesondere ist der Bewegungsbereich 45 des beweglichen Sensors 40 entsprechend angeordnet und/oder ausgebildet.

Gemäß einer Ausführungsform der Erfindung wird die ermittelte Position einer Gruppe 9v nicht verwendet, um die korrekte Positionierung des Manipulators des Gruppiermoduls 20 für diese Gruppe 9v zu berechnen. Stattdessen wird die Positionierung des Manipulators für die nächste oder eine weiter hinten nachfolgende Gruppe 9 angepasst. Dies kann notwendig sein, wenn der Bewegungsablauf des Manipulators für die jeweils erfasste Gruppe 9n bereits durch die Steuerungseinrichtung 12 berechnet worden ist, um die Schnelligkeit des Gesamtsystems optimal auszunutzen und nicht durch die sensorische Positionserfassung eine Verzögerung des Gruppiervorgangs zu bewirken.

Der Erkennungsbereich 50 des Sensors 40 deckt sich im Wesentlichen mit dem Erfassungsbereich 4 des Manipulators (nicht dargestellt) und der durch die Horizontalfördereinrichtung 60 gebildeten Förderfläche innerhalb des Gruppiermoduls 20. In dem in Transportrichtung TR liegenden Endbereich der Horizontalfördereinrichtung 6, der beispielsweise direkt an ein Lagenzentrierungsmodul (nicht dargestellt grenzt) können innerhalb des Gruppiermoduls 20, insbesondere innerhalb des Erkennungsbereichs 50 des Sensors 40 und innerhalb des Erfassungsbereichs 4 des Manipulators beispielsweise bereits erste Schritte einer nachfolgenden Lagenzentrierung durchgeführt werden.

Gemäß einer alternativen, nicht dargestellten Ausführungsform kann vorgesehen sein, dass der Erfassungsbereich 4 des Manipulators sowie der Bewegungsbereich 45 bzw. Erkennungsbereich 50 des Sensors 40 nur einen in Transportrichtung TR an die Transporteinrichtung 3 grenzenden Teilbereich der durch die Horizontalfördereinrichtung 6 gebildeten Förderfläche des Gruppiermoduls 20 abdeckt. In dem in Transportrichtung TR dahinter liegenden Bereich der Horizontalfördereinrichtung 6 können innerhalb des Gruppiermoduls 20 beispielsweise bereits erste Schritte einer nachfolgenden Lagenzentrierung durchgeführt werden. Bei einer weiteren alternativen, nicht dargestellten Ausführungsform kann der Sensor 40 einen Bewegungsbereich 45 aufweisen, der sich über die Horizontalfördereinrichtung 6 des Gruppiermoduls 20 hinaus erstreckt. Beispielsweise kann der Sensor 40 in einem solchen Fall auch zumindest teilweise einen Bereich eines in Transportrichtung TR nachgeordneten Lagenzentrierungsmoduls (nicht dargestellt) abfahren und in diesem Bereich gegebenenfalls bestimmte Parameter der zu zentrierenden Lage erfassen.

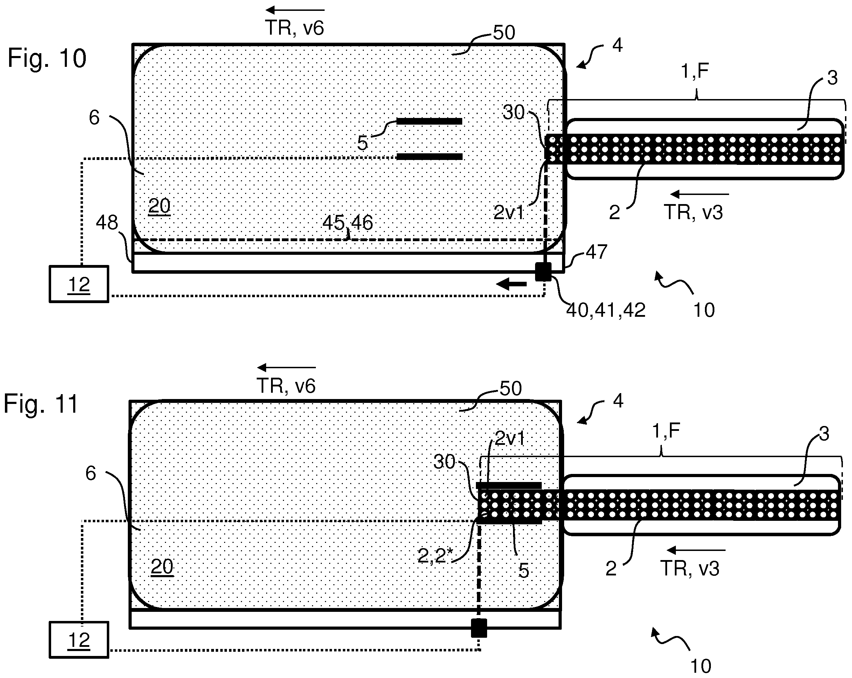

Die Figuren 10 bis 13 zeigen schematisch eine zweite Ausführungsform einer automatisierten Positionserkennung und/oder Kalibrierung innerhalb eines Gruppiermoduls 20 einer Handhabungsvorrichtung 10. Hierbei werden die Stückgüter 2 im Wesentlichen als lückenlose Reihe 1 bzw. Formation F über die Transporteinrichtung 3 zugeführt. Bei den Stückgütern 2 handelt es sich im dargestellten Ausführungsbeispiel jeweils um Gebinde aus sechs Getränkebehältern, die beispielsweise mit einer Schrumpfverpackung zusammen gehalten werden.

Die Stückgüter 2 werden in Transportrichtung TR mit einer vorzugsweise konstanten Transportgeschwindigkeit v3 in Richtung eines Erfassungsbereiches 4 eines beweg-, verschieb- und/oder rotierbaren Manipulators 5 der Handhabungsvorrichtung 10 bewegt und insbesondere lückenlos von der Transporteinrichtung 3 an eine Horizontalfördereinrichtung 6 übergeben und auf dieser in Transportrichtung TR mit einer konstanten Geschwindigkeit v6 weitergeführt, die insbesondere der Transportgeschwindigkeit v3 der Transporteinrichtung 3 entspricht.

Die Transporteinrichtung 3 ist beispielsweise ein Förderband oder eine andere geeignete Fördereinrichtung, auf der die Stückgüter 2 vorzugsweise einreihig transportiert werden, wobei zwischen jeweils direkt aufeinander folgenden Stückgütern 2 keine bzw. nur eine geringfügige, gegebenenfalls prozessbedingte, Lücken bestehen. Die Stückgüter 2 laufen somit in einer sogenannten geschlossenen Formation F in den Erfassungsbereich 4 des beweg-, verschieb- und/oder rotierbaren Manipulators 5 ein.

Die Horizontalfördereinrichtung 6 und der oberhalb der Horizontalfördereinrichtung 6 angeordnete mindestens eine Manipulator 5 werden zusammen auch als Gruppiermodul 20 der Handhabungsvorrichtung 10 bezeichnet. Die Stückgüter 2 werden insbesondere lückenlos von der mindestens einen Transporteinrichtung 3 in das Gruppiermodul 20 überführt und in diesem durch die Horizontalfördereinrichtung 6 konstant weiter bewegt.

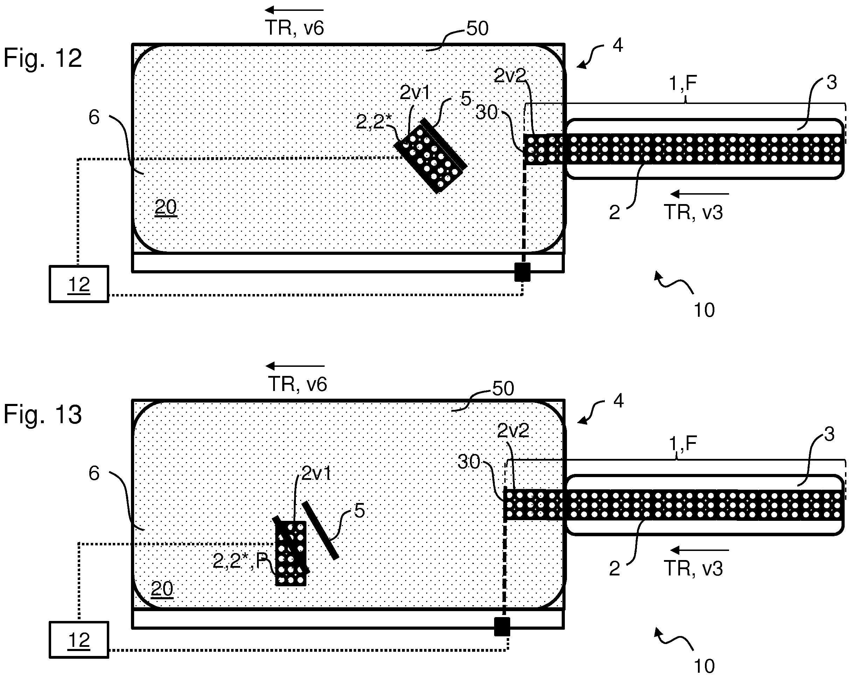

Der Manipulator 5 ist zum klemmenden und/oder kraft- und/oder formschlüssigen Entgegennehmen von Stückgütern 2 bzw. Gruppen von Stückgütern 2 innerhalb des Erfassungsbereichs 4 ausgebildet. Die vom Manipulator 5 erfassten Stückgüter 2 werden nachfolgend zur Unterscheidung von den in Formation F angeordneten Stückgütern 2 mit dem Bezugszeichen 2* bezeichnet. Beispielsweise greift der Manipulator 5 in mehreren zeitlich aufeinanderfolgenden Schritten mindestens ein, vorzugsweise mindestens zwei oder drei nacheinander angeordnete der in geschlossener Formation F und mit konstanter Transportgeschwindigkeit v3 einlaufenden Stückgüter 2, 2*, trennt diese von der einreihigen Formation F der Stückgüter 2 ab und überführt das abgetrennte Stückgut 2* bzw. die abgetrennte Gruppe von zwei oder drei lückenlos in Reihe angeordneten Stückgütern 2* in eine Zielposition P und/oder Zielausrichtung. Dabei kann vorgesehen sein, dass das Stückgut 2* bzw. die Gruppe von Stückgütern 2* seitlich gegenüber der einlaufenden Formation F an Stückgütern 2 verschoben wird und/oder dass das erfasste Stückgut 2* bzw. die erfasste Gruppe von Stückgütern 2* durch den Manipulator 5 in Transportrichtung TR von der Formation F der Stückgüter 2 beabstandet wird. Zusätzlich kann -wie in Figuren 12 und 13 dargestellt - bei dem erfindungsgemäßen Verfahren vorgesehen sein, dass das Stückgut 2* bzw. die Gruppe von Stückgütern 2* gegenüber den Stückgütern 2 der Formation F verdreht wird/werden.

Während der Positionierung der vom Manipulator 5 erfassten Stückgüter 2* werden die mindestens eine Transporteinrichtung 3 und die Horizontalfördereinrichtung 6 weiterhin konstant betrieben. Insbesondere werden die Stückgüter 2 der Formation F, sowie die bereits in der Zielposition P angeordneten Stückgüter 2* unterbrechungsfrei und/oder mit unveränderter Transportgeschwindigkeit v3 auf der Transporteinrichtung 3 bzw. mit unveränderter Geschwindigkeit v6 auf der Horizontalfördereinrichtung 6 weiter transportiert.

Der Manipulator 5 besitzt vorzugsweise eine bestimmte Aufnahmekapazität für mehrere Stückgüter 2, 2*. Jedoch ist vorgesehen, dass er in jedem Verfahrensschritt jeweils abgestimmt auf die zu bildende palettierfähige Lage oder Vorgruppierung einer palettierfähigen Lage jeweils eine bestimmte Anzahl von Stückgütern 2 der Formation F erfasst werden. Dies wird insbesondere über eine Steuereinrichtung 12 kontrolliert und/oder geregelt. Die Anzahl der erfassten Stückgüter2, 2* variiert hierbei zwischen eins und der maximalen Anzahl gemäß der Aufnahmekapazität des Manipulators 5. Auch wenn in den dargestellten Ausführungsbeispielen eine maximale Aufnahmekapazität von bis zu drei Stückgütern 2, 2* je Manipulator 5 beschrieben wird, so sind die genannten Überlegungen auch auf Manipulatoren 5 mit geringerer oder größerer maximaler Aufnahmekapazität analog anwendbar.

Auch bei dem in den Figuren 10 bis 13 dargestellten lückenlosen Zulauf von Stückgütern 2 zu einem Gruppiermodul 20 kann die Positionserkennung mit Hilfe eines beweglichen Sensors 40 und die darauf abgestimmte Kalibrierung des Manipulators 5 vorteilhaft eingesetzt werden, um einen fehlerfreien Prozess zu gewährleisten. Der Sensor 40 kann analog zu dem in den Figuren 1 bis 9 beschriebenen ersten Ausführungsbeispiel durch eine beweglich ausgebildete und/oder angeordnete Lichtschranke 41, einen beweglich ausgebildeten und/oder angeordneten Laserkantenscanner 42 oder einen anderes geeignetes Detektionsmittel gebildet sein.

Der bewegliche Sensor 40 ist in einem durch einen Anfangspunkt 47 und einen Endpunkt 48 begrenzten Bewegungsbereich 45 parallel zur Transportrichtung TR der in lückenloser Reihe 1 herangeführten Stückgüter 2 auf der Horizontalfördereinrichtung 6 des Gruppiermoduls 20 beweglich. In Bezug auf den Erkennungsbereich 50 des Sensors 40, der Beweglichkeit des Sensors 40 und der Steuerung des Sensors 40 durch die Steuerungseinheit 12 wird auf die Beschreibung zu den Figuren 1 bis 9 verwiesen.

Der beweggliche Sensor 40 erkennt eine Vorderkante 30 des voranlaufenden Stückgutes 2v1 am Anfangspunkt 47 seines Bewegungsbereiches 45, insbesondere mit Eintreten des zuvorderst einlaufenden Stückgutes 2v1 in den Erkennungsbereich 50 des Sensors 40. Nunmehr wird der Sensor 40 - wie in den Figuren 10 und 11 dargestellt - über die Laufschiene 46 parallel zu dem vordersten Stückgut 2v1 in Transportrichtung TR mitgeführt.

Wenn nunmehr der Manipulator 5 das vorderste Stückgut 2v1 oder eine Gruppe umfassend das vorderste Stückgut 2v1 und mindestens ein direkt nachlaufendes Stückgut 2, 2* erfasst und gemäß obiger Beschreibung in eine Zielposition P (vgl. Fig. 13) überführt, dann verliert der Sensor die erfasste Vorderkante 30 des vordersten Stückgutes 2v1. Aufgrund des Fehlens eines entsprechenden Signals wird durch die Steuereinheit 12 eine Bewegung des Sensors 40 entgegen der Transportrichtung TR der Stückgüter 2 ausgelöst. Der Sensor 40 wird daraufhin entgegen der Transportrichtung TR in Richtung des Anfangspunktes 47 seines Bewegungsbereiches 45 zurückgeführt, bis durch den Sensor 40 der entsprechende Parameter des nunmehr zuvorderst angeordneten Stückgutes 2v2 erfasst wird (vgl. Fig. 12). Im Anschluss daran wird der Sensor 40 wiederum - wie in Fig. 13 dargestellt - über die Laufschiene 46 parallel zu der Vorderkante 30 des erfassten vordersten Stückgut 2v2 in Transportrichtung TR mitgeführt, bis dieses vom Manipulator 5 erfasst und in eine gemäß einer zu bildenden Lage oder Teillage vordefinierte Zielposition und/oder Zielausrichtung (nicht dargestellt) gebracht wird und dabei den Erkennungsbereich 50 des Sensors 40 verlässt.

Die jeweilige Position des Sensors 40, insbesondere die Position wenn dieser parallel zu einer Vorderkante 30 des vom Sensor 40 erkannten zuvorderst angeordneten Stückgutes 2v1, 2v2 innerhalb des Bewegungsbereiches 45 mitgeführt wird, wird an die Steuerungseinrichtung 12 übermittelt. Anhand der Werte wird die genaue Position des zuvorderst angeordneten Stückgutes 2v1, 2v2 zu einem definierten Zeitpunkt berechnet. Vorzugsweise wird aus den Daten die Position des zuvorderst angeordneten Stückgutes 2v1 für den Zeitpunkt berechnet, an dem der Manipulator 5 das vorderste Stückgut 2v1, 2v2 und gegebenenfalls weitere direkt nachlaufende Stückgüter 2 der Formation F abgreift. Der berechnete Positionswert des vordersten Stückgutes 2v1, 2v2 für diesen Zeitpunkt wird mit einem Positionierungswert für den Manipulator 5 verglichen, der von der Steuerungseinheit 12 anhand eines Programmes ermittelt wurde, dass den Bewegungsablauf des Manipulators 5 zum Erstellen einer Teillage oder Lage aus Stückgütern 2 steuert. Bei einer Abweichung zwischen dem Positionswert des vordersten Stückgutes 2v1, 2v2 und dem Positionierungswert des Manipulators 5 wird die Bewegung des Manipulators 5 aufgrund des Positionswert des vordersten Stückgutes 2v1, 2v2 neu berechnet und somit kalibriert. Insbesondere werden nachfolgende Bewegungsabläufe ebenfalls anhand des Positionswerts des vordersten Stückgutes 2v1, 2v2 neu berechnet. Es erfolgt somit fortlaufend eine Korrektur des Bewegungsablaufs des Manipulators 5. Somit werden ungewünschte Lücken zwischen den im Wesentlichen lückenlos zugeförderten Stückgütern 2 zeitnah im Bewegungsablauf des Manipulators 5 berücksichtigt, so dass ein Aufsummieren solcher Lücken, das zu einem fehlerhaften Erfassen von Stückgütern 2 durch den Manipulator 5 insbesondere in späteren Verfahrensschritten führen könnte, effektiv verhindert werden kann.

Der Erkennungsbereich 50 des Sensors 40 und der Erfassungsbereich 4 des Manipulators 5 gemäß dem in den Figuren 10 bis 13 dargestellten Ausführungsbeispiel deckt sich im Wesentlichen mit der Förderfläche der Horizontalfördereinrichtung 6 des Gruppiermoduls 20. Insbesondere kann der Sensor 40 parallel zur gesamten Länge der Horizontalfördereinrichtung 6 des Gruppiermoduls 20 bewegt werden.

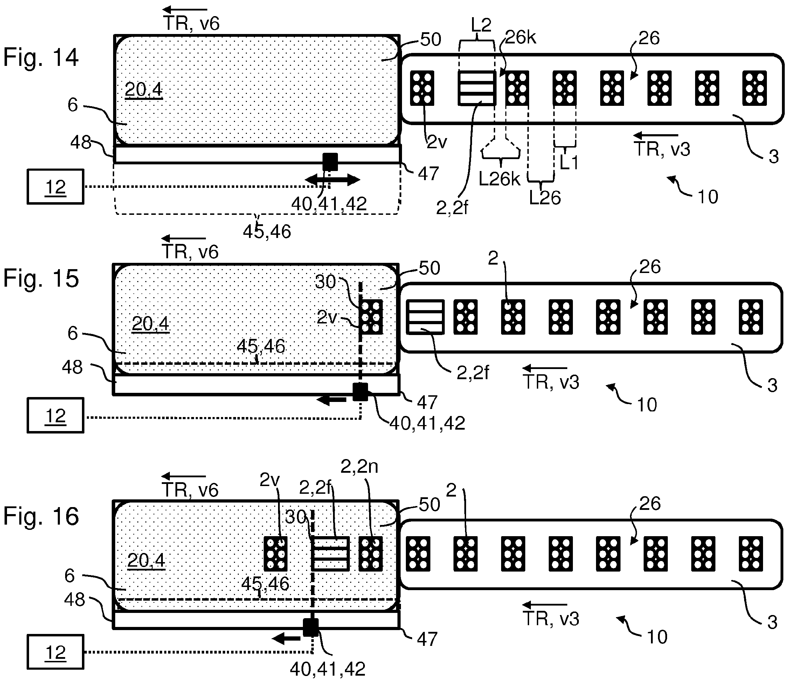

Die Figuren 14 bis 20 zeigen schematisch eine dritte Ausführungsform einer automatisierten Positionserkennung und/oder Kalibrierung innerhalb eines Gruppiermoduls 20. Analog zu den Figuren 1 bis 9 wird hierbei nicht dargestellt, wie die einlaufenden Stückgüter 2 innerhalb des Gruppiermoduls 20 behandelt werden, um eine entsprechende Teillage oder Gesamt- Palettierlage vorzubereiten. Hierzu wird insbesondere auf die Beschreibung zu den Figuren 10 bis 13 verwiesen.

Bei dieser Ausführungsform (Figuren 14 bis 20) werden Stückgüter 2, die beispielsweise Gebinde mit jeweils sechs vermittels einer Schrumpfverpackung zusammengefassten Getränkebehältern umfassen können, einzeln getaktet über eine Transporteinrichtung 3 dem Gruppiermodul 20 zugeführt. Die in Transportrichtung TR aufeinanderfolgend transportierten Stückgüter 2 sind dabei jeweils durch Lücken 26 voneinander beabstandet. Die Lücken 26 können insbesondere zuvor in einem nicht dargestellten Taktbildungsmodul erzeugt worden sein und weisen vorzugsweise alle dieselbe Größe L26 auf. Da es aber prozessbedingt und/oder aufgrund von Gebindemaßabweichungen der Stückgüter 2 zu Abweichungen in der Größe L26 der Lücken 26 kommen kann, ist es vorteilhaft, die genaue Position der Stückgüter 2 direkt vor und/oder innerhalb des Gruppiermoduls 20 zu bestimmen und den mindestens einen Manipulator (nicht dargestellt) des Gruppiermoduls 20 anhand dieser Messwerte regelmäßig oder in unregelmäßigen Abständen zu kalibrieren. Anhand der gemessenen Position des jeweilig durch den Sensor 40 erfassten vordersten Stückgutes 2v in Verbindung mit bekannten Verfahrensparametern, beispielsweise mit der Transportgeschwindigkeit v3 der Stückgüter 2 auf der zuführenden Transporteinrichtung 3 oder der Geschwindigkeit v6 der Stückgüter 2 auf einer Horizontalfördereinrichtung 6 des Gruppiermoduls 20, ist eine Kalibrierung des mindestens einen Manipulators (nicht dargestellt) des Gruppiermoduls 20 möglich. Dadurch wird sichergestellt, dass das jeweilig zu manipulierende in Transportrichtung TR vorauseilende Stückgut 2v im Gruppiermodul 20 durch geeignete Manipulatoren, beispielsweise Greifer o.ä., immer korrekt gegriffen und entsprechend verschoben, gedreht und/oder anderweitig manipuliert werden kann, um eine palettierfähige Lage oder eine Vorgruppierung für eine palettierfähige Lage zu bilden.

Die Positionserkennung und/oder Kalibrierung erfolgt mit Hilfe eines beweglichen Sensors 40, so wie er im Zusammenhang mit dem ersten und zweiten Ausführungsbeispiel bereits ausführlich beschrieben worden ist. Aus den vom Sensor an die Steuerungseinrichtung 12 ermittelten Daten kann diese eine Wegeauswertung durchführen, um eine Länge L1, L2 der Stückgüter 2 und/oder eine Länge L26 der Lücke 26 zu ermitteln. Die Länge L1 entspricht der Länge eines korrekt positionierten /ausgerichteten Stückgutes 2. Die Länge L2 entspricht der Länge eines umgekippten Stückgutes 2f. Weitere abweichende Längen Ln (nicht dargestellt) können sich ergeben, wenn ein Stückgut 2 beispielsweise schräg verschoben angeordnet ist. Die Länge L26 entspricht der Länge der zwischen den einzelnen, korrekt positionierten Stückgütern 2 ausgebildeten Lücke 26. Die Länge L26k entspricht der Länge einer verkürzten Lücke 26k, die beispielsweise aufgrund eines umgefallenen Stückgutes 2f verkleinert ausgebildet ist (vgl. Fig. 14). Die ermittelten Ist- Längenwerte werden durch die Steuerungseinrichtung 12 jeweils wird mit definierten Soll- Längenwerten verglichen. Wird dabei eine Diskrepanz zwischen dem Ist- Wert und einem Soll- Wert für L1 oder L26 ermittelt, so ist dies ein Indiz für ein umgefallenes oder schräg verschobenes Stückgut 2 o.ä.

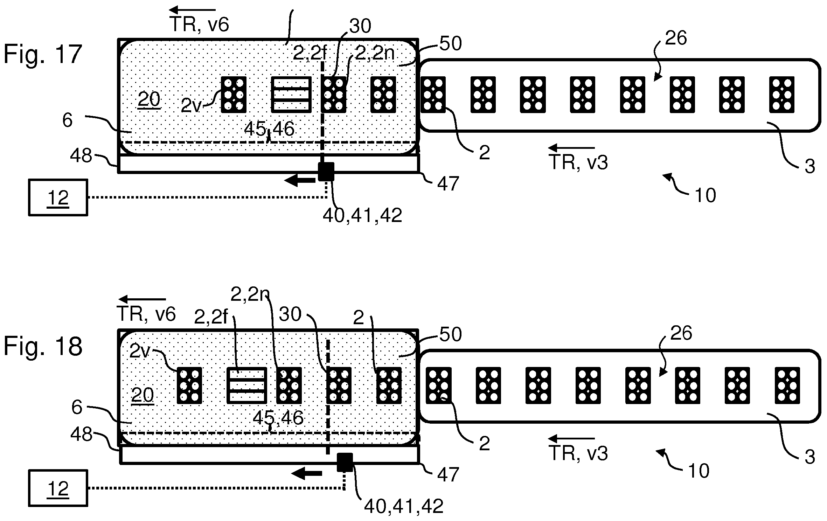

Der beweggliche Sensor 40 erkennt bei den anhand der Figuren 14 bis 20 beschriebenen Prozessschritten eine Vorderkante 30 des voranlaufenden Stückgutes 2v am Anfangspunkt 47 seines Bewegungsbereiches 45. Nunmehr wird der Sensor 40 - wie in den Fig. 15 dargestellt - über die Laufschiene 46 parallel zu dem voranlaufenden Stückgut 2v in Transportrichtung TR mitgeführt. Wenn das voranlaufende Stückgut 2v den Erkennungsbereich 50 des Sensors 40 verlässt, beispielsweise indem es durch einen Manipulator o.ä. erfasst und an eine Zielposition und/oder Zielausrichtung verbracht wird, wird der Sensor 40 in Gegenrichtung zur Transportrichtung TR verfahren, bis er die Vorderkante 30 des nachlaufenden Stückguts 2f erfasst. Im dargestellten Ausführungsbeispiel handelt es sich hierbei um ein umgefallenes und somit als fehlerhaft zu bezeichnendes Stückgut 2f. Anschließend wird der Sensor 40 wiederum -wie in Fig. 16 dargestellt - über die Laufschiene 46 parallel zu der Vorderkante 30 des erfassten Stückgutes 2f in Transportrichtung TR mitgeführt, bis dieses den Erkennungsbereich 50 des Sensors 40 verlässt, woraufhin der Sensor 40 auf bekannte Weise das nächste nachlaufende Stückgut 2n erfasst (vgl. Figuren 17 und 18).

Dabei können die Wegstrecken ermittelt und/oder berechnet werden, die der Sensor 40 in Transportrichtung TR und in Gegenrichtung zurücklegt und somit die Längen L1, L2, ...Ln des jeweiligen Stückgutes 2 und/ oder die Länge L26 der Lücke 26 zwischen aufeinanderfolgenden Stückgütern 2 ermittelt werden.

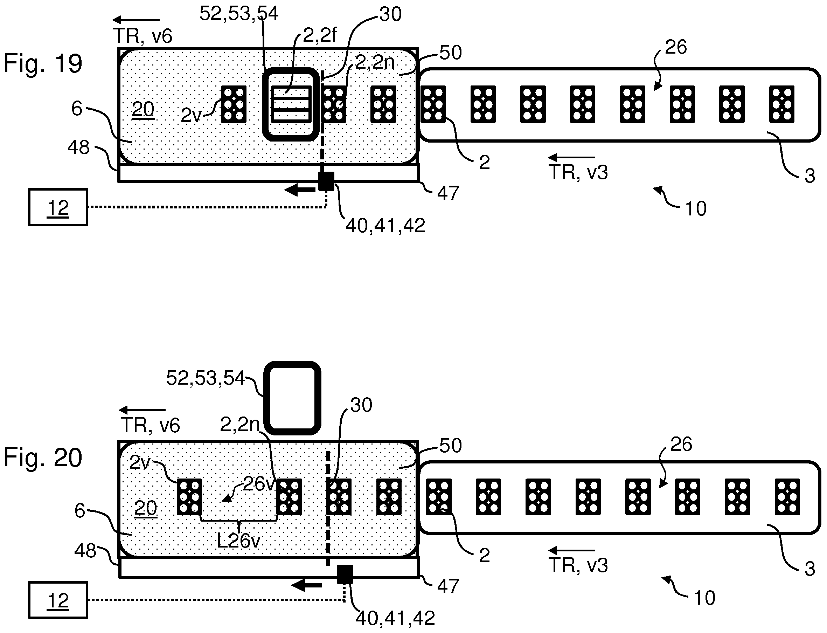

Wird dabei eine Diskrepanz zwischen dem Ist- Wert und einem Soll- Wert für L1 oder L26 ermittelt, so können weitere Korrekturmechanismen vorgesehen sein. Beispielsweise kann ein Warnsignal erzeugt werden und/oder ein Anlagenstopp herbeigeführt werden, damit korrigierend eingegriffen werden kann. Alternativ kann -wie in den Figuren 19 und 20 dargestellt - zusätzlich zu dem mindestens einen Manipulator (nicht dargestellt) des Gruppiermoduls 2 eine Korrektureinrichtung 52 o.ä. vorgesehen sein, die das als fehlerhaft erkannte Stückgut 2f aus dem Strom aus getaktet zugeführten Stückgütern 2 entfernt. Beispielsweise kann die Korrektureinrichtung 52 durch einen Greifer 53 gebildet sein, der das fehlerhafte Stückgut 2f herausgreift. Alternativ kann die Korrektureinrichtung 52 durch einen Pusher 54 gebildet sein, der das fehlerhafte Stückgut 2f senkrecht zur Transportrichtung TR aus der Reihe der in einer Flucht hintereinander angeordneten getakteten Stückgüter 2 herausschiebt. Weitere dem Fachmann bekannte Korrektureinrichtungen 52 können eingesetzt werden und sind von der vorliegenden Erfindung ebenfalls umfasst. Da durch das Entfernen des fehlerhaften Stückgutes 2f eine vergrößerte Lücke 26v mit einem erhöhten Abstand L26v zu dem im Strom der getaktet zugeführten Stückgüter 2 direkt nachfolgenden Stückgut 2n entsteht, muss der Manipulator des Gruppiermoduls 20 entsprechend neu kalibriert werden. Dies erfolgt vorzugsweise anhand der vom Sensor 40 erfassten Vorderkante 30 des dem fehlerhaften Stückgut 2f direkt nachfolgenden Stückgutes 2n durch die Steuerungseinrichtung 12.

Das beschriebene Kalibrierungssystem mit dem beweglichen Sensor 40 kann nach einem Fehler, einem anderweitig bedingten Produktionsstopp o.ä. problemlos wieder gestartet werden. Gegebenenfalls kann es vorteilhaft sein, wenn der Sensor 40 beim Neustart seinen Bewegungsbereich 45 zwischen Anfangs- und Endpunkt 47, 48 zumindest einmal komplett in Transportrichtung TR und/oder in Gegenrichtung abfährt. Dadurch können sich gegebenenfalls noch im Erkennungsbereich 50 befindliche Stückgüter 2 erkannt werden und die notwendigen Verfahrensparameter anhand dieser entsprechend berechnet werden.

Bei allen drei hier beschriebenen Ausführungsformen ist es weiterhin denkbar, dass die Stückgüter 2 mehrreihig, insbesondere in mehreren Parallelreihen zum Erfassungsbereich 4 des Manipulators 5 hin transportiert werden. Hierbei ist vorzugsweise ein Sensor 40 je Parallelreihe vorgesehen und es muss sichergestellt werden, dass die gemessenen Daten jeweils korrekt den entsprechenden Parallelreihen zugeordnet werden. Weiterhin ist denkbar, dass die Transporteinrichtung 3 und die Horizontalfördereinrichtung 6 unterschiedliche Förderabschnitte eines durchgängigen Förderbandes darstellen.

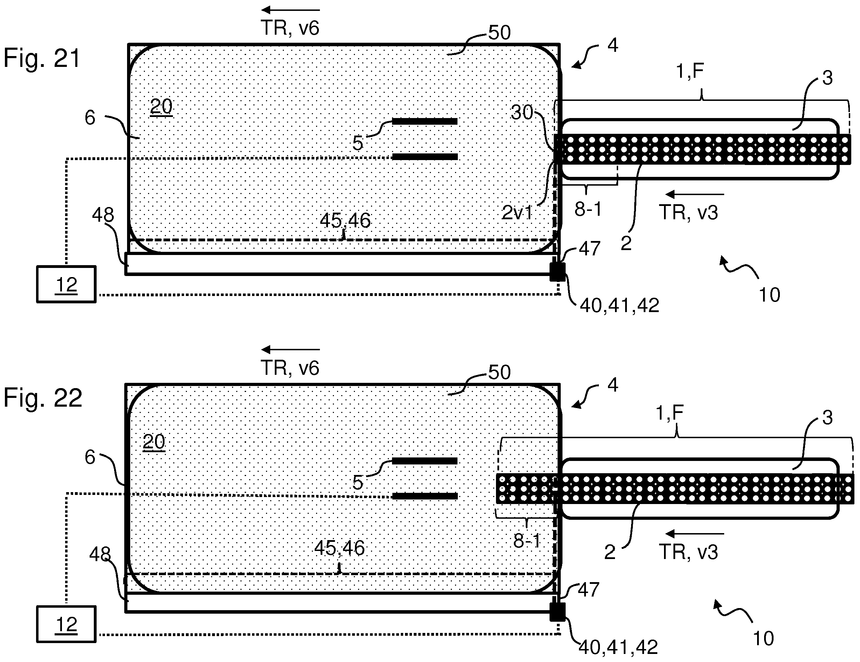

Die weiteren Figuren 21 bis 27 zeigen schematisch eine vierte Ausführungsform einer automatisierten Positionserkennung / Kalibrierung innerhalb eines Gruppiermoduls 20 einer erfindungsgemäßen Handhabungsvorrichtung 10. Hierbei werden die Stückgüter 2 analog zu der in den Figuren 10 bis 13 dargestellten zweiten Ausführungsform im Wesentlichen als lückenlose Reihe 1 bzw. Formation F über eine Transporteinrichtung 3 zugeführt. In Bezug auf die Transporteinrichtung 3, die Horizontalfördereinrichtung 6, den Manipulator 5 und weiterer Komponenten der Handhabungsvorrichtung 10 wird auf die Beschreibung der Figuren 1 bis 20, insbesondere auf die Beschreibung der Figuren 10 bis 13, verwiesen.

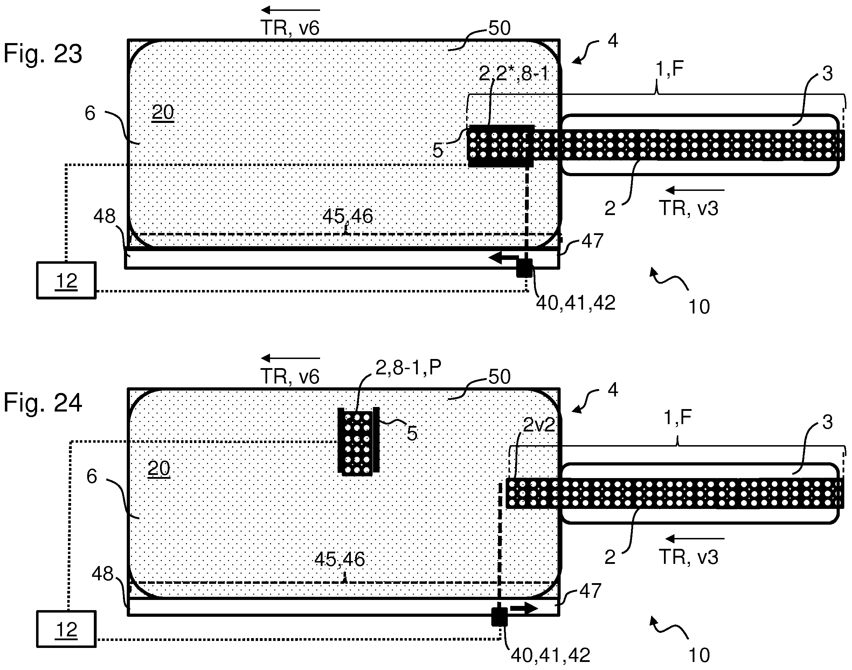

Gemäß Fig. 21 erfasst der bewegliche Sensor 40 eine Vorderkante 30 des voranlaufenden Stückgutes 2v1. Während die Stückgüter 2 der Formation F weiter in den Erfassungsbereich 4 des Manipulators 5 einlaufen, verbleibt der Sensor gemäß Fig. 22 stationär in seiner Position, bis die Formation F in etwa in Länge eines abzugreifenden Taktes weitertransportiert worden ist. Unter einem abzugreifenden Takt ist im vorliegenden Zusammenhang insbesondere eine Gruppe 8-1 von Stückgütern 2 zu verstehen, die zeitgleich und damit in einem Arbeitstakt durch den Manipulator 5 erfasst und in eine Zielposition P und/oder Zielausrichtung (vgl. Figuren 24 bis 27) verbracht werden. Insbesondere umfasst die Gruppe 8-1 im dargestellten Ausführungsbeispiel zwei Stückgüter 2. Unmittelbar anschließend wird -wie in Fig. 23 dargestellt - die Bewegung des Sensors 40 freigeschaltet bzw. aktiviert, so dass sich dieser über die Laufschiene 46 insbesondere synchron mit und parallel zu den sich bewegenden Stückgütern 2 der Formation F, insbesondere synchron mit und parallel zu den sich bewegenden Stückgütern 2 der noch nicht von der Formation F abgetrennten Gruppe 8-1, in Transportrichtung TR bewegt. In diesem Verfahrensstadium ist die Erfassungsfunktion des Sensors 40 vorzugsweise inaktiv, um keine Störsignale zu erzeugen, und die Bewegung des Sensors 40 erfolgt mit derselben Geschwindigkeit wie die Geschwindigkeit der Horizontalfördereinrichtung 6. Beispielsweise ist die Geschwindigkeit des Sensors 40 elektronisch an die Geschwindigkeit v6 der Horizontalfördereinrichtung 6 gekoppelt, so dass der Sensor 40 an dieser Geschwindigkeit v6 aufsynchronisiert wird. Wichtig ist hierbei auch, dass der Sensor 40 in seiner Bewegungsfahrt nicht zu spät mit seiner Synchronbewegung startet, sondern sichergestellt wird, dass er synchron zu den Stückgütern 2 des abzugreifenden Taktes, d.h. den Stückgütern 2 der Gruppe 8-1 bewegt und verfahren wird. Die Transportgeschwindigkeit v3 der die Stückgüter 2 zuführenden Transporteinrichtung 3 und die Geschwindigkeit v6 der Horizontalfördereinrichtung 6 sind jeweils bekannt. Insbesondere wird der Sensor 40 nach Erfassen der Vorderkante 30 des Stückgutes 2v1 so lange stationär gehalten, bis der Sensor in einem Bereich zwischen der Mitte und einer Hinterkante des abzugreifenden Taktes bzw. der Gruppe 8-1 angeordnet ist.

Während nunmehr der Manipulator 5 die Gruppe 8-1, umfassend das vorderste Stückgut 2v1 und zwei weitere Stückgüter 2, 2*, erfasst und gemäß obiger Beschreibung in eine Zielposition P (vgl. Fig. 24) überführt, kann der Sensor 40 wahlweise weiterhin synchron mit der Horizontalfördereinrichtung 6 bewegt werden. Alternativ kann vorgesehen sein, dass der Sensor 40 während des Abgreifens der Gruppe 8-1 durch den Manipulator 5 nicht weiterbewegt wird.

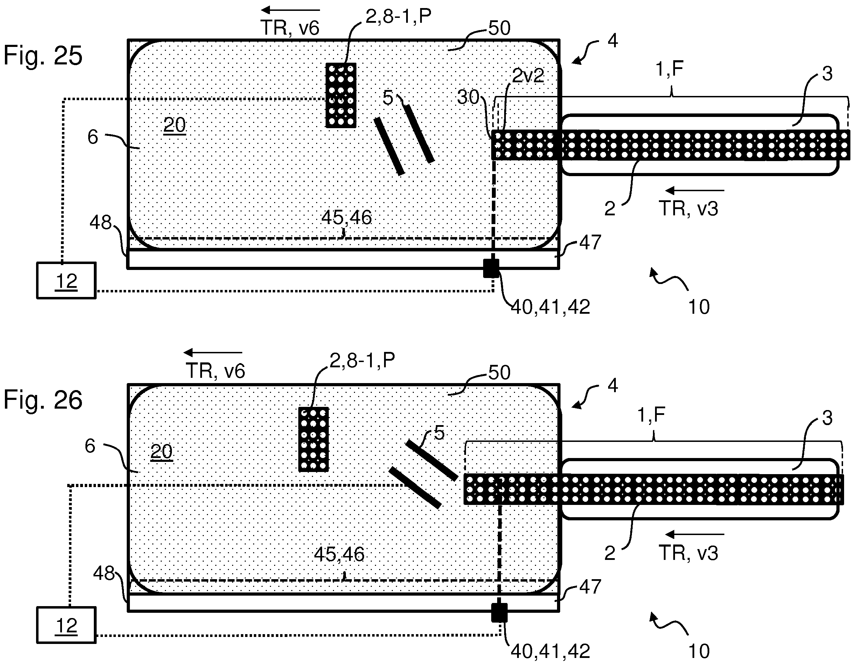

Nachdem der Manipulator 5 den entsprechenden Takt an Stückgütern 2, 2* bzw. die Gruppe 8-1 erfasst und von der Formation räumlich abgetrennt hat (vgl. Figuren 23 und 24), wird der Sensor 40 in seiner Erfassungsfunktion aktiviert, so dass er entsprechende Sensorsignale produzieren kann. Beispielsweise erhält die Steuereinheit 12 vom Manipulator 5 ein entsprechendes so genanntes "Shift Out"-Signal und aktiviert daraufhin den Sensor 40. Dieser wird nunmehr entgegen der Transportrichtung TR der Stückgüter 2 in Richtung des Anfangspunktes 47 seines Bewegungsbereiches 45 zurückgeführt (vgl. Fig. 24), bis durch den Sensor 40 der entsprechende Parameter, insbesondere die Vorderkante 30, eines nunmehr zuvorderst angeordneten Stückgutes 2v2 erfasst wird (vgl. Fig. 25).

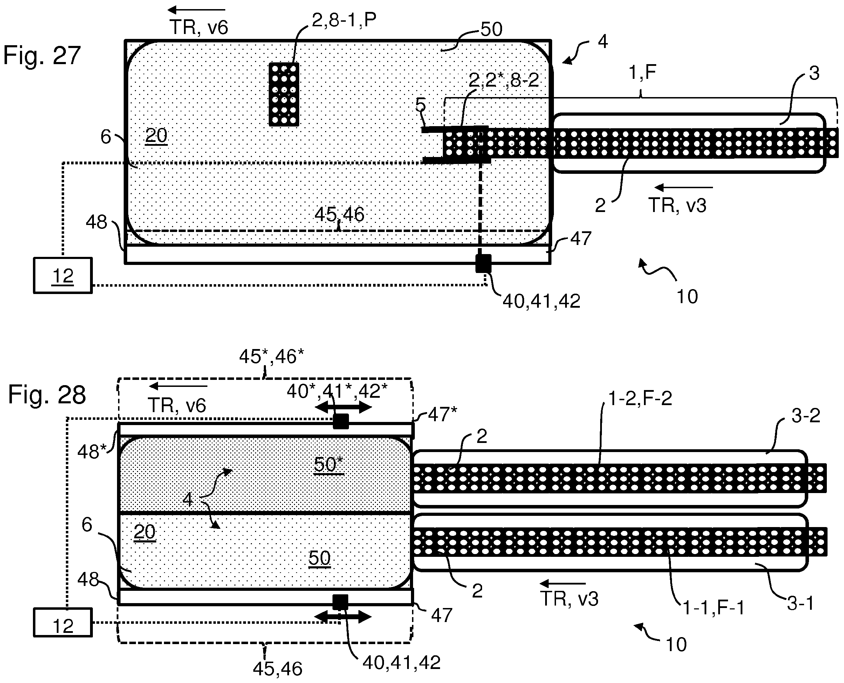

Nunmehr verbleibt der Sensor 40 wiederum so lange in der Position, bis die Formation F um eine Länge weitertransportiert wurde, die zumindest geringfügig kürzer ist als die Länge des nächsten durch den Manipulator 5 abzugreifenden Taktes bzw. der nächsten abzugreifenden Gruppe 8-2 umfassend zwei Stückgüter 2 (vgl. Fig. 27), um dann erneut synchron mitzulaufen, bis diese nächste Gruppe 8-2 analog zu obiger Beschreibung vom Manipulator 5 abgegriffen wird usw.

Der Vorteil bei dieser Ausführungsform besteht zum einen darin, dass der Sensor 40 hierbei geringere Wegstrecken zurücklegen muss. Dadurch kann das System schneller und zuverlässiger betrieben werden. Zudem werden Antriebe und weitere Komponenten des Systems geschont. Das Verfahren ist besonders vorteilhaft, wenn die Geschwindigkeit v6 der Horizontalfördereinrichtung 6 nicht konstant ist, weil beispielsweise statistische Schwankungen auftreten.

Sollte der Sensor 40 vor seiner Aktivierung in Transportrichtung TR hinter der Vorderkante 30 des nunmehr zuvorderst angeordneten Stückgutes 2v2 angeordnet sein, so kann dies bei einer Ausführungsform des Verfahrens erkannt und korrigiert werden. Dies beruht beispielsweise darauf, dass der Sensor 40 nach seiner Aktivierung sofort ein Stückgut 2 erfasst. In diesem Fall wird durch die Steuereinheit 12 nicht eine Bewegung des Sensors 40 entgegen der Transportrichtung TR sondern stattdessen eine Bewegung des Sensors 40 in Transportrichtung TR ausgelöst. Sobald der Sensor 40 detektiert, dass er sich vor der Reihe 1 an Stückgütern 2 befindet, wird die Bewegungsrichtung des Sensors 40 wieder umgekehrt, so dass dieser entgegen der Transportrichtung TR der Stückgüter 2 bewegt wird, um die Vorderkante 30 des zuvorderst angeordneten Stückgutes 2v2 sicher zu erfassen. Gemäß einer weiteren Ausführungsform kann der Sensor 40 durch eine Art Pendelbewegung an das zu erfassende Stückgut herangeführt werden.

Gemäß einer weiteren (nicht dargestellten Ausführungsform) der Erfindung kann der Sensor eine Hinterkante des vordersten Stückgutes erkennen und sich an dieser positionieren. Die weiteren Verfahrensschritte laufen im Wesentlichen analog zu einer der oben beschriebenen Ausführungsformen ab.

Die schematische Draufsicht der Fig. 28 zeigt eine fünfte Ausführungsform einer automatisierten Positionserkennung / Kalibrierung innerhalb eines Gruppiermoduls 20 einer erfindungsgemäßen Handhabungsvorrichtung 10. Hierbei ist die Zuführung von Stückgütern 2 in zwei parallelen Reihen 1-1, 1-2 bzw. Formationen F-1, F-2 vorgesehen. Die Zuführung der Stückgüter 2 kann über zwei parallele Transporteinrichtungen 3-1, 3-2 erfolgen. Diese können jeweils einen eigenen Antrieb aufweisen oder aber vermittels eines gemeinsamen Antriebs betrieben werden. Weist jede der Transporteinrichtungen 3-1, 3-2 einen eigenen Antrieb auf, so kann vorgesehen sein, dass diese unabhängig voneinander betrieben werden, oder aber miteinander gekoppelt sind, beispielsweise elektronisch. Alternativ können die zwei parallelen Reihen 1-1, 1-2 auch über eine gemeinsame, entsprechend breit ausgebildete Transporteinrichtung (nicht dargestellt) zu dem Gruppiermodul 20 befördert werden.

Die in zwei Reihen 1-1, 1-2 zugeführten Stückgüter werden vorzugsweise durch einen Manipulator (nicht dargestellt) bedient, der in Abhängigkeit vom zu bildenden Lagenschema jeweils Stückgüter 2 von einer Reihe 1-1 oder 1-2 abgreift. Beispielsweise kann vorgesehen sein, dass der Manipulator jeweils abwechselnd Stückgüter von den Reihen 1-1, 1-2 abgreift. In Abhängigkeit vom zu bildenden Lagenschema kann es auch notwendig sein, dass der Manipulator mehrfach hintereinander jeweils mindestens ein Stückgut nur aus einer der beiden Reihen 1-1 oder 1-2 abgreift, bevor er sich wiederum an der anderen Reihe 1-2 oder 1-1 bedient.

Für jeder der beiden Reihen 1-1, 1-2 ist eine Sensoranordnung umfassend einen Sensor 40, 40* mit einem entsprechenden Bewegungsbereich 45, 45* und einem entsprechenden Erkennungsbereich 50, 50* vorgesehen. Insbesondere sind die vorzugsweise optisch arbeitenden Sensoren 40, 40* derart ausgebildet, dass mit diesen jeweils Hell-Dunkel-Kontraste innerhalb eines definierbaren Entfernungsbereichs erkannt werden. Dadurch wird sichergestellt, dass der Sensor 40 immer nur Stückgüter 2 der Formation F-1 im Erkennungsbereich 50 erfasst und dass der Sensor 40* immer nur Stückgüter 2 der Formation F-2 im Erkennungsbereich 50* erfasst.

In Bezug auf die mit dieser Anordnung möglichen unterschiedlichen Bewegungsabläufe der Sensoren 40, 40* wird auf die Beschreibung zu den Figuren 1 bis 27 verwiesen.

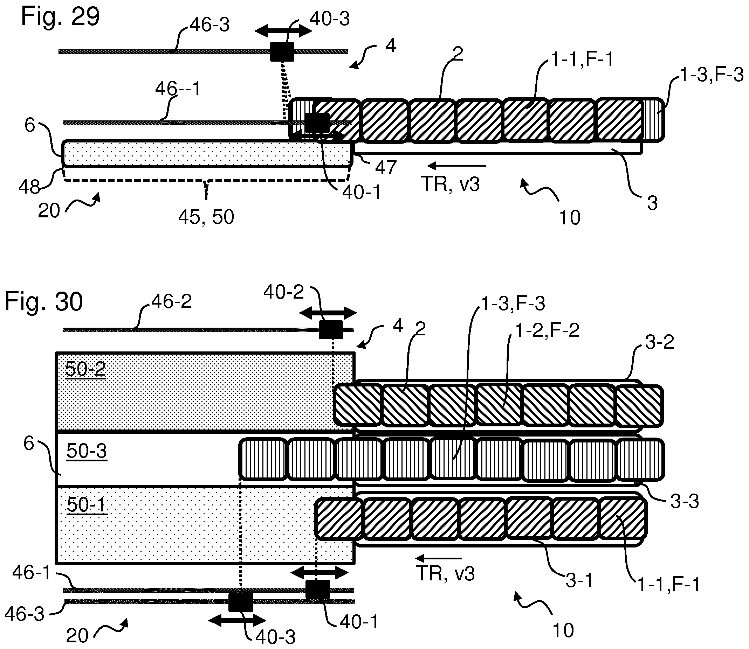

Figur 29 zeigt schematisch eine seitliche Darstellung einer sechsten Ausführungsform einer automatisierten Positionserkennung / Kalibrierung innerhalb eines Gruppiermoduls 20 einer erfindungsgemäßen Handhabungsvorrichtung 10 und Figur 30 zeigt eine Darstellung dieser Ausführungsform von oben.

Hierbei erfolgt eine Zuführung von Stückgütern 2 in drei parallelen Reihen 1-1, 1-2, 1-3 bzw. Formationen F-1, F-2, F-3. Die Zuführung der Stückgüter 2 kann über drei parallele Transporteinrichtungen 3-1, 3-2, 3-3 erfolgen (vgl. Figur 30). Diese können jeweils einen eigenen Antrieb aufweisen oder aber vermittels eines gemeinsamen Antriebs betrieben werden. Weist jede der Transporteinrichtungen 3-1, 3-2, 3-3 einen eigenen Antrieb auf, so kann vorgesehen sein, dass diese unabhängig voneinander betrieben werden, oder aber miteinander gekoppelt sind, beispielsweise elektronisch. Alternativ können die drei parallelen Reihen 1-1, 1-2, 1-3 auch über eine gemeinsame, entsprechend breit ausgebildete Transporteinrichtung 3 (vgl. Figur 29) zu dem Gruppiermodul 20 befördert werden.

Die in drei Reihen 1-1, 1-2, 1-3 zugeführten Stückgüter werden vorzugsweise durch einen Manipulator (nicht dargestellt) bedient, der in Abhängigkeit vom zu bildenden Lagenschema jeweils Stückgüter 2 von einer Reihe 1-1, 1-2 oder 1-3 abgreift. Beispielsweise kann vorgesehen sein, dass der Manipulator jeweils abwechselnd Stückgüter von den Reihen 1-1, 1-2 und 1-3 abgreift. In Abhängigkeit vom zu bildenden Lagenschema kann es auch notwendig sein, dass der Manipulator mehrfach hintereinander jeweils mindestens ein Stückgut nur aus einer der Reihen 1-1, 1-2 oder 1-3 abgreift, bevor er sich wiederum an einer der anderen Reihen 1-1, 1-2 oder 1-3 bedient.

Für jeder der Reihen 1-1, 1-2 oder 1-3 ist eine Sensoranordnung umfassend einen an einer Laufschiene 46-1, 46-2, 46-3 angeordneten Sensor 40-1, 40-2, 40-3 mit einem entsprechenden Bewegungsbereich 45 (nur in Figur 29 dargestellt) und einem entsprechenden Erkennungsbereich 50, 50-1, 50-2, 50-3 vorgesehen. Insbesondere sind die vorzugsweise optisch arbeitenden Sensoren 40-1, 40-2, 40-3 derart ausgebildet, dass mit diesen jeweils Hell-Dunkel-Kontraste innerhalb eines definierbaren Entfernungsbereichs erkannt werden.

Der Sensor 40-3, der die Stückgüter 2 der mittleren Reihe 1-3 erfasst, ist ebenfalls seitlich neben der Horizontalfördereinrichtung 6 außerhalb des Erfassungsbereichs 4 des Manipulators (nicht dargestellt) angeordnet. Jedoch ist der Sensor 40-3 oberhalb des Sensors 40-2 angeordnet, so dass der Sensor 40-3 in einem schiefen Winkel zu den in der mittleren Reihe 1-3 als geschlossene Formation F-3 transportierten Stückgütern 2 steht. Der Sensor 40-3 muss entsprechend ausgebildet, angeordnet und/oder eingestellt sein, um die in der mittleren Reihe 1-3 transportierten Stückgüter 2 sicher zu erfassen. Durch die beschriebene Anordnung wird sichergestellt, dass der Sensor 40-1 immer nur Stückgüter 2 der Formation F-1 im Erkennungsbereich 50-1 erfasst, während der Sensor 40-2 immer nur Stückgüter 2 der Formation F-2 im Erkennungsbereich 50-2 erfasst und der Sensor 40-3 immer nur Stückgüter 2 der Formation F-3 im Erkennungsbereich 50-3 erfasst.

In Bezug auf die mit dieser Anordnung möglichen unterschiedlichen Bewegungsabläufe der Sensoren 40-1, 40-2, 40-3 und die Steuerung vermittels einer in den Figuren 29 und 30 nicht dargestellten Steuerungseinrichtung wird auf die Beschreibung zu den Figuren 1 bis 27 verwiesen.

Bei allen hier beschriebenen Ausführungsformen ist ein Bewegungsablauf für den Manipulator vordefiniert, der aufgrund der sensorisch ermittelten Daten angepasst wird, um Abweichungen im Zustrom der Stückgüter 2 und deren exakte Positionierungen im Zustrom auszugleichen. Insbesondere kann in Abhängigkeit von der vorhandenen Rechenleistung vorgesehen sein, dass die Daten jeweils erst für die Korrektur des Bewegungsablaufs des Manipulators für einen in einem nachfolgenden Manipulationsschritt abzugreifenden Takt verwendet werden. Der vorrangige Grund hierfür liegt darin, dass die Bewegungen des Manipulators 5 in aller Regel bereits vorausberechnet sind, wenn er die jeweilige Gruppe an Stückgütern 2 aufnimmt, um sie anschließend zu positionieren. Eine Korrektur aufgrund einer erfassten Lageabweichung durch die Sensoren 40, 40* ist zu diesem Zeitpunkt normalerweise nicht mehr möglich, sondern erst für die Neuberechnung des nächstfolgenden Arbeitstaktes des Manipulators 5.

Aufgrund der sensorisch ermittelten Daten können wahlweise auch Abweichungen in den Abmaßen der Stückgüter 2 und/oder der Transportgeschwindigkeit v3 und/oder Fördergeschwindigkeit v6 und/oder Abweichungen durch um die Hochachse verdrehte Stückgüter usw. erkannt werden. Die Daten können entsprechend verwendet werden, um das Bewegungsprofil nachfolgender Manipulationsschritte in seiner Gesamtheit zu korrigieren.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezuaszeichenliste

- 1; 1-1; 1-2; 1-3: Reihe
- 2: Stückgut
- 2f: fehlerhaftes / umgefallenes Stückgut
- 2n: nachlaufendes Stückgut
- 2v: voranlaufendes Stückgut / zuvorderst einlaufendes Stückgut / zuvorderst angeordnetes Stückgut
- 2v1; 2v2: vorderstes Stückgut / zuvorderst angeordnetes Stückgut
- 3; 3-1; 3-2: Transporteinrichtung
- 4: Erfassungsbereich
- 5: Manipulator
- 6: Horizontalfördereinrichtung
- 8-1; 8-2: Gruppe
- 9: Gruppe
- 9v: vordere / vorderste Gruppe
- 9n: nachlaufende Gruppe
- 10: Handhabungsvorrichtung
- 12: Steuerungseinrichtung
- 20: Gruppiermodul
- 25: Lücke
- 26: Lücke
- 26k: verkürzte Lücke
- 26v: vergrößerte Lücke
- 30: Vorderkante
- 40; 40*; 40-1; 40-2; 40-3: Sensor
- 41; 41*: Lichtschranke
- 42; 42*: Laserkantenscanner
- 45; 45*; 45-1; 45-2; 45-3: Bewegungsbereich
- 46; 46*,46-1; 46-2; 46-3: Laufschiene
- 47; 47*: Anfangspunkt
- 48; 48*: Endpunkt
- 50; 50*; 50-1; 50-2; 50-3: Erkennungsbereich
- 52: Korrektureinrichtung
- 53: Greifer
- 54: Pusher
- F; F-1; F-2; F-3: Formation
- L1; L2; Ln; L30: Länge
- L26: Länge/Größe einer Lücke
- L26k: Länge/Größe einer verkürzten Lücke
- L26v: erhöhter Abstand
- P: Zielposition
- TR: Transportrichtung
- v3: Transportgeschwindigkeit
- v6: Geschwindigkeit

## Patentansprüche

1. Vorrichtung (10) zur Durchführung eines Verfahrens zum Umgang mit bewegten Stückgütern (2) nach einem der Ansprüche 5 bis 13, umfassend
- mindestens einen Manipulator (5) für Stückgüter (2),
- wenigstens eine Transporteinrichtung (3), über welche die bewegten Stückgüter (2) in einer Transportrichtung (TR) zu einem Erfassungsbereich (4) des mindestens einen Manipulators (5) transportierbar sind, sowie
- wenigstens eine dem Erfassungsbereich (4) und/oder einem Bewegungsraum des wenigstens einen Manipulators (5) zugeordnete bewegbare optische Erfassungseinrichtung (40), die zur Gewinnung von Raumkoordinaten und/oder Positions- und/oder Umrissdaten wenigstens eines in Transportrichtung (TR) bewegten Stückgutes (2) vorbereitet und ausgestattet ist,
- wobei zumindest der Manipulator (5) und/oder weitere Förderkomponenten der Vorrichtung (10) auf Grundlage der Raumkoordinaten und/oder Positions- und/oder Umrissdaten kalibrierbar und/oder steuerbar ist/sind,
**dadurch gekennzeichnet, dass** der optischen Erfassungseinrichtung (40) ein eigener, vom Manipulator (5) unabhängiger Antrieb zugeordnet ist und wobei
- die optische Erfassungseinrichtung (40) parallel zur Transportrichtung (TR) in Transportrichtung (TR) der über die Transporteinrichtung (3) zugeführten Stückgüter (2) oder entgegen der Transportrichtung (TR) der über die Transporteinrichtung (3) zugeführten Stückgüter (2) beweglich ausgebildet ist.

2. Vorrichtung nach Anspruch 1, bei der die optische Erfassungseinrichtung (40) zumindest temporär parallel beweglich zu einer dem Erfassungsbereich (4) zugeordneten Horizontalfördereinrichtung (6) ausgebildet ist.

3. Vorrichtung nach Anspruch 1 oder 2, bei der die optische Erfassungseinrichtung (40) durch wenigstens eine Lichtschrankenanordnung (41) mit einem quer zur Transportrichtung (TR) und in etwa horizontal und/oder parallel zu einer Auflage- und/oder Transportebene der Horizontalfördereinrichtung (6) für die Stückgüter (2) ausgerichteten Strahlengang gebildet ist, insbesondere wobei die Lichtschrankenanordnung (41) durch eine Reflexionslichtschranke zur Erfassung von Hell-Dunkel-Kontrasten innerhalb eines definierbaren Entfernungsbereichs vom eines Senders/Empfängers ausgebildet ist.

4. Vorrichtung nach Anspruch 1 oder 2, bei der die optische Erfassungseinrichtung (40) durch mindestens einen Kantenscanner gebildet ist, welcher der Steuer- und/oder Auswerteeinheit (12) Raumkoordinaten und/oder Positions- und/oder Umrissdaten für ein bewegtes Stückgute liefert, insbesondere Raumkoordinaten und/ Positions- und/oder Umrissdaten für das jeweils zuvorderst befindliche Stückgut (2) und/oder einer in Transportrichtung (TR) nach vorne oder nach hinten weisender Umrisskante (30) liefert oder wobei die optische Erfassungseinrichtung (40) durch mindestens eine Kamera mit nachgeschalteter Bildauswertung gebildet ist, aus deren Daten die Steuer- und/oder Auswerteeinheit (12) Raumkoordinaten und/oder Positions- und/oder Umrisswerte für ein bewegtes Stückgut (2) gewinnt, insbesondere Raumkoordinaten und/ Positions- und/oder Umrisswerte für das jeweils zuvorderst befindliche Stückgut (2) und/oder dessen in Transportrichtung (TR) nach vorne oder nach hinten weisender Umrisskante (30) gewinnt.

5. Verfahren zum Umgang mit bewegten Stückgütern (2), wobei die Stückgüter (2) zu einem Erfassungsbereich (4) wenigstens eines Manipulators (5) transportiert werden;
- wobei im Erfassungsbereich (4) wenigstens ein transportiertes Stückgut (2) durch den wenigstens einen Manipulator (5) erfasst, von nachfolgenden Stückgütern (2) räumlich abgetrennt und in eine definierte relative Zielposition (P) und/oder Zielausrichtung gegenüber den jeweils nachfolgenden Stückgütern (2) gebracht wird,
- wobei zumindest Raumkoordinaten und/oder eine Position eines der in Transportrichtung (TR) zum Erfassungsbereich (4) bewegten Stückgüter (2) über wenigstens eine dem Erfassungsbereich (4) räumlich und/oder funktionell zugeordneten und beweglich ausgebildeten optischen Erfassungseinrichtung (40) sensorisch erfasst und einer Steuer- und/oder Auswerteeinheit (12) als Positionswert zur Verfügung gestellt wird, und
- wobei zumindest der Manipulator (5) und/oder weitere zugeordnete Förderkomponenten auf Grundlage der Raumkoordinaten und/oder Positions- und/oder Umrissdaten kalibriert und/oder gesteuert wird/werden,
durch gekennzeichnet, dass die optische Erfassungseinrichtung (40) unabhängig vom Manipulator (5) angetrieben wird und wobei
- die optische Erfassungseinrichtung (40) parallel zur Transportrichtung (TR) der über die Transporteinrichtung (3) zugeführten Stückgüter (2) oder entgegen der Transportrichtung (TR) der über die Transporteinrichtung (3) zugeführten Stückgüter (2) bewegt wird.

6. Verfahren nach Anspruch 5, bei dem die optische Erfassungseinrichtung (40) zumindest temporär parallel zu einer dem Erfassungsbereich (4) zugeordneten Horizontalfördereinrichtung (6) bewegt wird, insbesondere wobei die optische Erfassungseinrichtung (40) zumindest temporär in etwa synchron mit einer Auflage- und/oder Transportebene einer/der dem Erfassungsbereich (4) zugeordneten Horizontalfördereinrichtung (6) mitbewegt wird.

7. Verfahren nach einem der Ansprüche 5 oder 6, bei dem die Bewegungssteuerung des wenigstens einen Manipulators (5) im Erfassungsbereich (4) zur Erfassung wenigstens eines zuvorderst angeordneten Stückgutes (2) oder wenigstens eines zuvorderst angeordneten Stückgutes eines nachfolgenden Manipulationsschrittes oder zumindest eines der nachfolgenden Manipulationsschritte und zu seiner räumlichen Abtrennung von den nachfolgenden Stückgütern (2) auf Grundlage der von der Steuer- und/oder Auswerteeinheit (12) gelieferten Koordinaten- und/oder Positionswerte für ein jeweils zuvorderst in den Erfassungsbereich (4) befindliches oder eintretendes Stückgut (2) und/oder dessen in Transportrichtung (TR) nach vorne oder nach hinten weisender Umrisskante (30) erfolgt.

8. Verfahren nach Anspruch 7, bei dem die optische Erfassungseinrichtung (40) zumindest solange der Position der in Transportrichtung (TR) nach vorne weisenden Umrisskante (30) des zuvorderst befindlichen Stückgutes (2) folgt, bis dieses zuvorderst befindliche Stückgut (2) vom Manipulator (5) erfasst und von den nachfolgenden Stückgütern (2) abgetrennt wird.

9. Verfahren nach einem der Ansprüche 7 oder 8, bei dem die optische Erfassungseinrichtung (40) nach Erfassung und Abtrennung des mindestens einen zuvorderst transportierten Stückgutes (2) entgegen der Transportrichtung (TR) bis zur optischen Erfassung der in Transportrichtung (TR) nach vorne weisenden Umrisskante (30) des nächstfolgenden Stückgutes (2) oder eines der folgenden Stückgüter (2) bewegt und anschließend in etwa synchron mit der Auflage- und/oder Transportebene der dem Erfassungsbereich (4) zugeordneten Horizontalfördereinrichtung (6) mitbewegt wird und dabei zumindest solange der Position der in Transportrichtung (TR) nach vorne weisenden Umrisskante (30) des zuvorderst befindlichen Stückgutes (2) folgt, bis dieses vom Manipulator (5) erfasst und von den nachfolgenden Stückgütern (2) abgetrennt wird.

10. Verfahren nach einem der Ansprüche 7 bis 9, bei dem die Bewegungssteuerungen des wenigstens einen Manipulators (5) bei der jeweiligen Erfassung wenigstens eines zuvorderst befindlichen Stückgutes (2) im Erfassungsbereich (4) auf Grundlage der von der Steuer- und/oder Auswerteeinheit (12) gelieferten Koordinaten- und/oder Positionswerte für das jeweils zuvorderst befindliche Stückgut (2) und/oder dessen nach vorne weisender Umrisskante (30) kalibriert werden oder auf Grundlage der von der Steuer- und/oder Auswerteeinheit (12) gelieferten Koordinaten- und/oder Positionswerte für ein in einer vorangegangenen Förderphase und/oder einem vorangegangenen Manipulationsschritt durch den Manipulator (5) erfasstes Stückgut (2) und/oder dessen nach vorne weisender Umrisskante (30) kalibriert werden, insbesondere bei dem die Bewegungssteuerung des wenigstens einen Manipulators (5) bei jeder Phase der Erfassung und Aufnahme des wenigstens einen Stückgutes (2) von den zum Erfassungsbereich (4) transportierten Stückgütern (2) auf Grundlage der von der Steuer- und/oder Auswerteeinheit (12) gelieferten Koordinaten- und/oder Positionswerte für das jeweils zuvorderst befindliche Stückgut (2) und/oder dessen nach vorne weisender Umrisskante (30) oder auf Grundlage der von der Steuer- und/oder Auswerteeinheit (12) gelieferten Koordinaten- und/oder Positionswerte für ein in einer vorangegangenen Förderphase und/oder einem vorangegangenen Manipulationsschritt durch den Manipulator (5) erfasstes Stückgut (2) und/oder dessen nach vorne weisender Umrisskante (30) kalibriert wird.

11. Verfahren nach Anspruch 7, bei dem die optische Erfassungseinrichtung (40) nach Erfassen einer Umrisskante (30) wenigstens einen Stückgutes (2) oder wenigstens eines zuvorderst angeordneten Stückgutes eines nachfolgenden Manipulationsschrittes oder zumindest eines der nachfolgenden Manipulationsschritte für eine definierte Zeiteinheit stationär verbleibt und anschließend synchron mit der Horizontalfördereinrichtung (6) mitgeführt wird, wobei der Manipulator nach dem Abgreifen und räumlichen Abtrennen mindestens eines Stückgutes (2) ein Signal erzeugt, woraufhin die Bewegung der optischen Erfassungseinrichtung (40) angehalten und die optische Erfassungseinrichtung (40) aktiviert wird und/oder wobei eine Bewegung der optischen Erfassungseinrichtung (40) entgegen der Transportrichtung (TR) ausgelöst wird und die optische Erfassungseinrichtung (40) aktiviert wird, und wobei die optische Erfassungseinrichtung (40) so lange entgegen der Transportrichtung (TR) bewegt wird, bis sie eine nach vorn weisende Umrisskante (30) eines nachfolgenden Stückgutes (2) erfasst.

12. Verfahren nach einem der Ansprüche 5 oder 6, wobei die Bewegungssteuerung des wenigstens einen Manipulators (5) im Erfassungsbereich (4) zur Erfassung wenigstens eines bewegten Stückgutes (2) oder wenigstens eines bewegten Stückgutes eines nachfolgenden Manipulationsschrittes oder zumindest eines der nachfolgenden Manipulationsschritte und zu seiner räumlichen Abtrennung von den nachfolgenden Stückgütern (2) auf Grundlage der von der Steuer- und/oder Auswerteeinheit (12) gelieferten Koordinaten- und/oder Positionswerte für jeweils ein bewegtes Stückgut (2) und/oder dessen in Transportrichtung (TR) nach hinten weisender Umrisskante (30) erfolgt.

13. Verfahren nach einem der Ansprüche 5 bis 12, bei dem einzelne voneinander beabstandete Stückgüter (2), voneinander beabstandete Gruppen (9) mit zwei oder mehr Stückgütern (2), voneinander beabstandete gleiche oder unterschiedlich große Gruppen (9) mit jeweils gleicher oder unterschiedlicher Anzahl von Stückgütern (2), in ununterbrochener Formation (F) angeordnete Stückgüter (2) und/oder in unterbrochener Reihe (1) mit gleichen oder unterschiedlich großen Lücken (25, 26) zwischen aufeinanderfolgenden Stückgütern (2) und/oder Gruppen (9) von Stückgütern (2) zum Erfassungsbereich (4) transportiert und dort mittels der optischen Erfassungseinrichtung (40) sensiert und die entsprechenden Signale zur jeweiligen Kalibrierung des Manipulators (5) auf die jeweiligen Positionen der im selben Manipulationsschritt, in einem nachfolgenden Manipulationsschritt oder zumindest einem der nachfolgenden Manipulationsschritte zu erfassenden Stückgüter (2) verarbeitet werden.

14. Förder-, Verarbeitungs- und/oder Verpackungsanlage für Stückgüter (2) mit einer Vorrichtung (10) zum Umgang mit bewegten Stückgütern (2) gemäß einem der Ansprüche 1 bis 4,
- wobei der Vorrichtung (10) Förderstrecken und/oder Manipulierstationen zur Anordnung der Stückgüter in für die Vorrichtung (10) verarbeitbare Konfigurationen vorgeordnet und mindestens eine Palettierstation zur Anordnung der mittels der Vorrichtung (10) gruppierten und/oder in Lagenanordnungen gebrachten Stückgüter (2) nachgeordnet sind,
- und wobei die wenigstens eine dem Erfassungsbereich (4) und/oder einem Bewegungsraum des wenigstens einen Manipulators (5) zugeordnete, beweglich ausgebildete optische Erfassungseinrichtung (40), die zur Gewinnung von Raumkoordinaten und/oder Positions- und/oder Umrissdaten wenigstens eines in Transportrichtung (TR) bewegten Stückgutes (2) vorbereitet und ausgestattet ist, über einen eigenständigen, insbesondere von der Transportrichtung (3), über welche die bewegten Stückgüter (2) zu einem Erfassungsbereich (4) des mindestens einen Manipulators (5) transportierbar sind, unabhängigen Antrieb verfügt
- wobei der optische Erfassungseinrichtung (40) ein eigener, vom Manipulator (5) unabhängiger Antrieb zugeordnet ist und wobei
- die optische Erfassungseinrichtung (40) parallel zur Transportrichtung (TR) der über die Transporteinrichtung (3) zugeführten Stückgüter (2) oder entgegen der Transportrichtung (TR) der über die Transporteinrichtung (3) zugeführten Stückgüter (2) beweglich ausgebildet ist.

15. Förder-, Verarbeitungs- und/oder Verpackungsanlage nach Anspruch 14, bei der die optische Erfassungseinrichtung (40) zumindest temporär parallel beweglich zu einer dem Erfassungsbereich (4) zugeordneten Horizontalfördereinrichtung (6) ausgebildet ist und/oder wobei zumindest der Manipulator (5) auf Grundlage der Raumkoordinaten und/oder Positions- und/oder Umrissdaten kalibrierbar und/oder steuerbar ist/sind.

## Claims

1. An apparatus (10) for performing a method for handling moved piece goods (2) according to one of the claims 5 to 13, the apparatus (10) comprising
- at least one manipulator (5) for piece goods (2);
- at least one transport device (3) by way of which the moved piece goods (2) are transportable, in a transport direction (TR), to a seizing range (4) of the at least one manipulator (5); as well as
- at least one movable optical detection device (40) assigned to the seizing range (4) and/or to a movement range of the at least one manipulator (5), which optical detection device (40) is prepared and equipped for obtaining space coordinates and/or position data and/or contour data of at least one piece good (2) that is being moved in transport direction (TR),
- wherein at least the manipulator (5) and/or further conveyor components of the apparatus (10) is/are calibratable and/or controllable based on the space coordinates and/or position data and/or contour data,
**characterized in that** the optical detection device (40) comprises an own drive that is independent of the manipulator (5) and wherein
- the optical detection device (40) is designed to be movable parallel to the transport direction (TR) in the transport direction (TR) of the piece goods (2) supplied via the transport device (3) or against the transport direction (TR) of the piece goods (2) supplied via the transport device (3).

2. The apparatus as recited in claim 1, with the optical detection device (40) being designed to be at least temporarily movable parallel to a horizontal conveying device (6) that is assigned to the seizing range (4).

3. The apparatus as recited in claim 1 or 2, with the optical detection device (40) being formed by at least one light barrier arrangement (41) with an optical path that is aligned to be transverse to the transport direction (TR) and approximately horizontal and/or parallel to a support layer and/or transport layer of the horizontal conveying device (6) for the piece goods (2), especially wherein the light barrier arrangement (41) is being formed by a reflection light barrier for detecting light/dark contrasts within a definable distance range of a transmitter/receiver.

4. The apparatus as recited in claim 1 or 2, with the optical detection device (40) being formed by at least one edge scanner that provides space coordinates and/or position data and/or contour data for a moved piece good to the control unit and/or analysis unit (12), that provides, in particular, space coordinates and/or position data and/or contour data for the in each case foremost located piece good (2) and/or for a contour edge (30) facing forward or backward in relation to the transport direction (TR) or wherein the optical detection device (40) is formed by at least one camera with downstream image evaluation, from the data of which the control unit and/or analysis unit (12) obtains space coordinates and/or position values and/or contour values for a moved piece good (2), in particular, space coordinates and/or position values and/or contour values for the in each case foremost located piece good (2) and/or for said piece good's contour edge (30) that faces forward or backward in relation to the transport direction (TR).

5. A method for handling moved piece goods (2), wherein the piece goods (2) are being transported to a seizing range (4) of at least one manipulator (5);
- wherein at least one transported piece good (2) is seized in the seizing range (4) by the at least one manipulator (5), is spatially separated from the subsequent piece goods (2), and is brought into a specified relative target position (P) and/or target alignment in relation to the in each case subsequent piece goods (2);
- wherein at least space coordinates and/or a position of one of the piece goods (2) that is being moved in transport direction (TR) to the seizing range (4) is sensor-detected and provided as position value to a control unit and/or analysis unit (12) by at least one optical detection device (40) that is designed to be movable and that is spatially and/or functionally assigned to the seizing range (4); and
- wherein at least the manipulator (5) and/or further associated conveyor components is/are calibrated and/or controlled based on the space coordinates and/or position data and/or contour data,
**characterized in that** the optical detection device (40) is driven independently of the manipulator (5) and wherein
- the optical detection device (40) is moved parallel to the transport direction (TR) of the piece goods (2) supplied via the transport device (3) or against the transport direction (TR) of the piece goods (2) supplied via the transport device (3).

6. The method as recited in claim 5, with the optical detection device (40) being moved at least temporarily parallel to a horizontal conveying device (6) that is assigned to the seizing range (4), especially wherein the optical detection device (40) is being moved along at least temporarily and approximately in synchrony with a support layer and/or transport layer of a/the horizontal conveying device (6) that is assigned to the seizing range (4).

7. The method as recited in one of the claims 5 or 6, wherein the movement control of the at least one manipulator (5) in the seizing range (4) to seize at least one foremost disposed piece good (2) or at least one foremost disposed piece good of a subsequent manipulation step or of at least one of the subsequent manipulation steps and to spatially separate said piece good (2) from the subsequent piece goods (2) is being carried out based on the coordinate values and/or position values provided by the control unit and/or analysis unit (12) for a piece good (2) that is in each case located foremost in the seizing range (4) or entering foremost into the seizing range (4) and/or for said piece good's (2) contour edge (30) that faces forward or backward in relation to transport direction (TR).

8. The method as recited in claim 7, with the optical detection device (40) following the position of the foremost located piece good's (2) contour edge (30) that faces forward in transport direction (TR) for at least as long as until said foremost located piece good (2) is seized by the manipulator (5) and is separated from the subsequent piece goods (2).

9. The method as recited in one of the claims 7 or 8, wherein, after seizing and separation of the at least one foremost transported piece good (2), the optical detection device (40) is moved opposite to the transport direction (TR) up to the optical detection of the subsequent piece good's (2) contour edge (30) or of one of the following piece goods' (2) contour edges (30) that faces/face forward in transport direction (TR), and is subsequently moved along approximately in synchrony with the support layer and/or transport layer of the horizontal conveying device (6) that is assigned to the seizing range (4), and in the process follows the position of the foremost located piece good's (2) contour edge (30) that faces forward in transport direction (TR) for at least as long until said piece good (2) is seized by the manipulator (5) and separated from the subsequent piece goods (2).

10. The method as recited in one of the claims 7 to 9, with the movement controls of the at least one manipulator (5) being calibrated during the particular seizing of at least one foremost located piece good (2) in the seizing range (4) based on the coordinate values and/or position values provided by the control unit and/or analysis unit (12) for the in each case foremost located piece good (2) and/or for said piece good's (2) forward-facing contour edge (30), or being calibrated based on the coordinate values and/or position values provided by the control unit and/or analysis unit (12) for a piece good (2) that has been seized by the manipulator (5) in a preceding conveying phase and/or in a preceding manipulation step and/or for said piece good's (2) forward-facing contour edge (30), in particular, with the movement control of the at least one manipulator (5) being calibrated during each phase of the seizing and receiving of the at least one piece good (2) from the piece goods (2) that have been transported to the seizing range (4) based on the coordinate values and/or position values provided by the control unit and/or analysis unit (12) for the in each case foremost located piece good (2) and/or for said piece good's (2) forward-facing contour edge (30), or based on the coordinate values and/or position values provided by the control unit and/or analysis unit (12) for a piece good (2) that has been seized by the manipulator (5) in a preceding conveying phase and/or in a preceding manipulation step and/or for said piece good's (2) forward-facing contour edge (30).

11. The method as recited in claim 7, with the optical detection device (40) remaining stationary for a specified unit of time after detecting a contour edge (30) of at least one piece good (2) or of at least one foremost disposed piece good of a subsequent manipulation step or of at least one of the following manipulation steps, and being subsequently guided along in synchrony with the horizontal conveying device (6), wherein the manipulator generates a signal after picking off and spatially separating at least one piece good (2), whereupon the movement of the optical detection device (40) is stopped and the optical detection device (40) is activated, and/or wherein a movement of the optical detection device (40) opposite to the transport direction (TR) is triggered and the optical detection device (40) is activated, and wherein the optical detection device (40) is moved opposite to the transport direction (TR) for as long as until it detects an forward-facing contour edge (30) of a subsequent piece good (2).

12. The method as recited in one of the claims 5 or 6, wherein the movement control of the at least one manipulator (5) in the seizing range (4) to seize at least one moved piece good (2) or at least one moved piece good of a subsequent manipulation step or at least one of the subsequent manipulation steps and to spatially separate said piece good (2) from the subsequent piece goods (2) is carried out based on the coordinate values and/or position values provided by the control unit and/or analysis unit (12) for in each case one moved piece good (2) and/or for said piece good's contour edge (30) facing backward in relation to the transport direction (TR).

13. The method as recited in one of the claims 5 to 12, with individual, spaced-apart piece goods (2); spaced-apart groups (9) with two or more piece goods (2); spaced-apart, equally or differently sized groups (9), each with the same or different number of piece goods (2); piece goods (2) arranged in an uninterrupted formation (F) and/or in an interrupted row (1) with equally or differently sized spaces (25, 26) between consecutive piece goods (2) and/or groups (9) of piece goods (2) being transported to the seizing range (4) and being sensed there by means of the optical detection device (40), and corresponding signals being processed for the particular calibration of the manipulator (5) to the particular positions of the piece goods (2) to be seized in the same manipulation step, in a subsequent manipulation step, or at least in one of the subsequent manipulation steps.

14. A system for conveying, processing, and/or packaging piece goods (2), the system having an apparatus (10) for handling moved piece goods (2) as recited in one of the claims 1 to 4,
- wherein conveyor lines and/or manipulation stations for arranging the piece goods into configurations that are processable by the apparatus (10) are disposed upstream from the apparatus (10), and at least one palletizing station for arranging the piece goods (2) that have been grouped and/or brought into layer arrangements by means of the apparatus (10) are disposed downstream from the apparatus (10),
- and wherein the at least one optical detection device (40) that is designed to be movable, that is assigned to the seizing range (4) and/or to a movement range of the at least one manipulator (5), and that is prepared and equipped for obtaining space coordinates and/or position data and/or contour data of at least one piece good (2) being moved in transport direction (TR), has a discrete drive that is, in particular, independent of the transport device (3) by way of which the moved piece goods (2) are transportable to a seizing range (4) of the at least one manipulator (5),
- wherein an own drive is assigned to the optical detection device (40), which drive is independent of the manipulator (5), and wherein
- the optical detection device (40) is designed to be movable parallel to the transport direction (TR) of the piece goods (2) supplied via the transport device (3) or against the transport direction (TR) of the piece goods (2) supplied via the transport device (3).

15. The system for conveying, processing, and/or packaging as recited in claim 14, with the optical detection device (40) being designed to be at least temporarily movable parallel to a horizontal conveying device (6) that is assigned to the seizing range (4) and/or wherein at least the manipulator (5) is calibratable and/or controllable based on the space coordinates and/or position data and/or contour data.

## Revendications

1. Dispositif (10) de mise en œuvre d'un procédé de manipulation de produits de détail (2) déplacés selon l'une quelconque des revendications 5 à 13, comprenant
- au moins un manipulateur (5) pour les produits de détail (2),
- au moins un dispositif de transport (3) par l'intermédiaire duquel les produits de détail (2) déplacés peuvent être transportés dans une direction de transport (TR) vers une zone de saisie (4) dudit au moins un manipulateur (5), ainsi qu'
- au moins un dispositif de détection optique (40) apte à être déplacé qui est associé à la zone de saisie (4) et/ou à un espace de déplacement dudit au moins un manipulateur (5) et qui est préparé et équipé pour acquérir des coordonnées spatiales et/ou des données de position et/ou de contour d'au moins un produit de détail (2) déplacé dans la direction de transport (TR),
- dans lequel au moins le manipulateur (5) et/ou d'autres composants de transport du dispositif (10) peuvent être calibrés et/ou commandés sur la base des coordonnées spatiales et/ou des données de position et/ou de contour,
**caractérisé par le fait qu'**au dispositif de détection optique (40) est associé un propre mécanisme d'entraînement qui est indépendant du manipulateur (5), et dans lequel
- le dispositif de détection optique (40) est réalisé de manière à être déplaçable parallèlement à la direction de transport (TR) dans la direction de transport (TR) des produits de détail (2) amenés par l'intermédiaire du dispositif de transport (3) ou à l'encontre de la direction de transport (TR) des produits de détail (2) amenés par l'intermédiaire du dispositif de transport (3).

2. Dispositif selon la revendication 1, dans lequel le dispositif de détection optique (40) est conçu de manière à être au moins temporairement déplaçable parallèlement à un dispositif de transport horizontal (6) associé à la zone de saisie (4).

3. Dispositif selon la revendication 1 ou 2, dans lequel le dispositif de détection optique (40) est formé par au moins un ensemble de barrage photoélectrique (41) ayant un trajet des rayons orienté transversalement à la direction de transport (TR) et à peu près horizontalement et/ou parallèlement à un plan de support et/ou de transport du dispositif de transport horizontal (6) pour les produits de détail (2), en particulier dans lequel ledit ensemble de barrage photoélectrique (41) est formé par un barrage photoélectrique de réflexion destiné à détecter des contrastes clairs-obscurs à l'intérieur d'une zone de distance définissable à partir d'un émetteur/récepteur.

4. Dispositif selon la revendication 1 ou 2, dans lequel le dispositif de détection optique (40) est formé par au moins un scanner de bord qui fournit à l'unité de commande et/ou d'évaluation (12) des coordonnées spatiales et/ou des données de position et/ou de contour pour un produit de détail déplacé, en particulier des coordonnées spatiales et/ou des données de position et/ou de contour pour le produit de détail (2) se trouvant respectivement en premier et/ou d'un bord de contour (30) montrant vers l'avant ou vers l'arrière dans la direction de transport (TR), ou dans lequel le dispositif de détection optique (40) est formé par au moins une caméra avec une évaluation d'image en aval, à partir des données de laquelle l'unité de commande et/ou d'évaluation (12) acquiert des coordonnées spatiales et/ou des valeurs de position et/ou de contour pour un produit de détail (2) déplacé, en particulier des coordonnées spatiales et/ou des valeurs de position et/ou de contour pour le produit de détail (2) se trouvant respectivement en premier et/ou son bord de contour (30) montrant vers l'avant ou vers l'arrière dans la direction de transport (TR).

5. Procédé de manipulation de produits de détail (2) déplacés, dans lequel les produits de détail (2) sont transportés vers une zone de saisie (4) d'au moins un manipulateur (5);
- dans lequel, dans la zone de saisie (4), au moins un produit de détail (2) transporté est saisi par ledit au moins un manipulateur (5), est séparé spatialement de produits de détail (2) suivants et est amené dans une position cible (P) et/ou une orientation cible relative(s) définie(s) par rapport aux produits de détail (2) respectivement suivants,
- dans lequel au moins des coordonnées spatiales et/ou une position de l'un des produits de détail (2) déplacés dans la direction de transport (TR) vers la zone de saisie (4) sont/est détectée(s) par capteur par l'intermédiaire d'au moins un dispositif de détection optique (40) qui est associé spatialement et/ou fonctionnellement à la zone de saisie (4) et est réalisé de manière mobile, et sont/est mise(s) à la disposition d'une unité de commande et/ou d'évaluation (12) en tant que valeur de position, et
- dans lequel au moins le manipulateur (5) et/ou d'autres composants de transport associés est/sont calibré(s) et/ou commandé(s) sur la base des coordonnées spatiales et/ou des données de position et/ou de contour,
**caractérisé par le fait que** le dispositif de détection optique (40) est entraîné indépendamment du manipulateur (5), et dans lequel
- le dispositif de détection optique (40) est déplacé parallèlement à la direction de transport (TR) des produits de détail (2) amenés par l'intermédiaire du dispositif de transport (3) ou à l'encontre de la direction de transport (TR) des produits de détail (2) amenés par l'intermédiaire du dispositif de transport (3).

6. Procédé selon la revendication 5, dans lequel le dispositif de détection optique (40) est déplacé au moins temporairement parallèlement à un dispositif de transport horizontal (6) associé à la zone de saisie (4), en particulier dans lequel le dispositif de détection optique (40) est déplacé au moins temporairement, à peu près en synchronisme, conjointement avec un plan de support et/ou de transport d'un/du dispositif de transport horizontal (6) associé à la zone de saisie (4).

7. Procédé selon l'une quelconque des revendications 5 ou 6, dans lequel la commande de déplacement dudit au moins un manipulateur (5) dans la zone de saisie (4) pour saisir au moins un produit de détail (2) disposé en premier ou au moins un produit de détail (2) disposé en premier d'une étape de manipulation suivante ou d'au moins l'une des étapes de manipulation suivantes, et pour séparer celui-ci spatialement des produits de détail (2) suivants se fait sur la base des valeurs de coordonnées et/ou de position fournies par l'unité de commande et/ou d'évaluation (12) pour un produit de détail (2) situé respectivement en premier ou entrant le premier dans la zone de saisie (4) et/ou de son bord de contour (30) montrant vers l'avant ou vers l'arrière dans la direction de transport (TR).

8. Procédé selon la revendication 7, dans lequel le dispositif de détection optique (40) suit la position du bord de contour (30) du produit de détail (2) se trouvant en premier, qui montre vers l'avant dans la direction de transport (TR), au moins jusqu'à ce que ce produit de détail (2) se trouvant en premier soit saisi par le manipulateur (5) et soit séparé des produits de détail (2) suivants.

9. Procédé selon l'une quelconque des revendications 7 ou 8, dans lequel, après avoir saisi et séparé ledit au moins un produit de détail (2) transporté en premier, le dispositif de détection optique (40) est déplacé à l'encontre de la direction de transport (TR) jusqu'à la détection optique du bord de contour (30) du produit de détail (2) suivant, qui montre vers l'avant dans la direction de transport (TR), ou de l'un des produits de détail (2) suivants, et est déplacé ensuite à peu près en synchronisme conjointement avec le plan de support et/ou de transport du dispositif de transport horizontal (6) associé à la zone de saisie (4), tout en suivant la position du bord de contour (30) du produit de détail (2) se trouvant en premier, qui montre vers l'avant dans la direction de transport (TR), au moins jusqu'à ce que celui-ci soit saisi par le manipulateur (5) et soit séparé des produits de détail (2) suivants.

10. Procédé selon l'une quelconque des revendications 7 à 9, dans lequel les commandes de déplacement dudit au moins un manipulateur (5) dans la saisie respective, dans la zone de saisie, d'au moins un produit de détail (2) se trouvant en premier, sont calibrées sur la base des valeurs de coordonnées et/ou de position pour le produit de détail (2) situé respectivement en premier et/ou son bord de contour (30) montrant vers l'avant, qui sont fournies par ladite unité de commande et/ou de d'évaluation (12), ou sont calibrées sur la base des valeurs de coordonnées et/ou de position pour un produit de détail (2) saisi par le manipulateur (5) dans une phase de transport précédente et/ou une étape de manipulation précédente, et/ou pour son bord de contour (30) montrant vers l'avant, qui sont fournies par ladite unité de commande et/ou de d'évaluation (12), en particulier dans lequel la commande de déplacement dudit au moins un manipulateur (5), dans chaque phase de la saisie et de la réception dudit au moins un produit de détail (2) des produits de détail (2) transportés vers la zone de saisie (4) est calibrée sur la base des valeurs de coordonnées et/ou de position pour le produit de détail (2) situé respectivement en premier et/ou son bord de contour (30) montrant vers l'avant, qui sont fournies par ladite unité de commande et/ou de d'évaluation (12), ou sur la base des valeurs de coordonnées et/ou de position pour un produit de détail (2) saisi par le manipulateur (5) dans une phase de transport précédente et/ou une étape de manipulation précédente, et/ou pour son bord de contour (30) montrant vers l'avant, qui sont fournies par ladite unité de commande et/ou de d'évaluation (12).

11. Procédé selon la revendication 7, dans lequel le dispositif de détection optique (40), après avoir détecté un bord de contour (30) d'au moins un produit de détail (2) ou d'au moins un produit de détail disposé en premier d'une étape de manipulation suivante ou d'au moins l'une des étapes de manipulation suivantes reste stationnaire pour une unité de temps définie et est ensuite entraîné en synchronisme avec le dispositif de transport horizontal (6), dans lequel le manipulateur génère un signal après la préhension et la séparation spatiale d'au moins un produit de détail (2), ce après quoi le mouvement du dispositif de détection optique (40) est arrêté et le dispositif de détection optique (40) est activé, et/ou dans lequel un mouvement du dispositif de détection optique (40) à l'encontre de la direction de transport (TR) est déclenché et le dispositif de détection optique (40) est activé, et dans lequel le dispositif de détection optique (40) est déplacé à rencontre de la direction de transport (TR) jusqu'à ce qu'il détecte un bord de contour (30) montrant vers l'avant, d'un produit de détail (2) suivant.

12. Procédé selon l'une quelconque des revendications 5 ou 6, dans lequel la commande de déplacement dudit au moins un manipulateur (5) dans la zone de saisie (4) pour saisir au moins un produit de détail (2) déplacé ou au moins un produit de détail (2) déplacé d'une étape de manipulation suivante ou d'au moins l'une des étapes de manipulation suivantes et pour séparer celui-ci spatialement des produits de détail (2) suivants se fait sur la base des valeurs de coordonnées et/ou de position pour respectivement un produit de détail (2) et/ou son bord de contour (30) montrant vers l'arrière dans la direction de transport (TR), qui sont fournies par l'unité de commande et/ou d'évaluation (12).

13. Procédé selon l'une quelconque des revendications 5 à 12, dans lequel des produits de détail (2) individuels espacés les uns des autres, des groupes (9) comprenant deux produits de détail (2) ou plus et espacés les uns des autres, des groupes (9) de taille identique ou différente ayant chacun un nombre identique ou différent de produits de détail (2) et espacés les uns des autres, des produits de détail (2) disposés en une formation (F) ininterrompue et/ou en une rangée (1) interrompue et présentant des intervalles (25, 26) identiques ou différents entre des produits de détail (2) successifs et/ou des groupes (9) de produits de détail (2) sont transportés vers la zone de saisie (4) et y sont détectés au moyen du dispositif de détection optique (40), et les signaux correspondants pour le calibrage respectif du manipulateur (5) aux positions respectives des produits de détail (2) à saisir dans la même étape de manipulation, dans une étape de manipulation suivante ou au moins dans l'une des étapes de manipulation suivantes sont traités.

14. Installation de transport, de traitement et/ou d'emballage de produits de détail (2), comprenant un dispositif (10) de manipulation de produits de détail (2) déplacés selon l'une quelconque des revendications 1 à 4,
- dans laquelle des trajets de transport et/ou des postes de manipulation destinés à disposer les produits de détail dans des configurations aptes à être traitées par le dispositif (10) sont disposés en amont du dispositif (10) et au moins un poste de palettisation destiné à disposer les produits de détail (2) groupées et/ou placées en agencements de couches au moyen du dispositif (10) sont disposés en aval du dispositif (10),
- et dans laquelle ledit au moins un dispositif de détection optique (40) réalisé de manière mobile qui est associé à la zone de saisie (4) et/ou à un espace de mouvement dudit au moins un manipulateur (5) et qui est préparé et équipé pour acquérir des coordonnées spatiales et/ou des données de position et/ou de contour d'au moins un produit de détail (2) déplacé dans la direction de transport (TR) dispose d'un mécanisme d'entraînement autonome, en particulier indépendant du dispositif de transport (3) par l'intermédiaire duquel les produits de détail (2) déplacés peuvent être transportés vers une zone de saisie (4) dudit au moins un manipulateur (5),
- dans laquelle audit dispositif de détection optique (40) est associé un propre mécanisme d'entraînement qui est indépendant du manipulateur (5), et dans laquelle
- le dispositif de détection optique (40) est réalisé de manière à être déplaçable parallèlement à la direction de transport (TR) des produits de détail (2) amenés par l'intermédiaire du dispositif de transport (3) ou à l'encontre de la direction de transport (TR) des produits de détail (2) amenés par l'intermédiaire du dispositif de transport (3).

15. Installation de transport, de traitement et/ou d'emballage selon la revendication 14, dans laquelle le dispositif de détection optique (40) est conçu de manière à être au moins temporairement déplaçable parallèlement à un dispositif de transport horizontal (6) associé à la zone de saisie (4), et/ou dans laquelle au moins le manipulateur (5) peut être calibré et/ou commandé sur la base des coordonnées spatiales et/ou des données de position et/ou de contour.
